(19) Europäisches Patentamt
European Patent Office
Office européen des brevets

(11) **EP 4 661 327 A1**

(12) **EUROPEAN PATENT APPLICATION**
published in accordance with Art. 153(4) EPC

(43) Date of publication:
**10.12.2025 Bulletin 2025/50**

(21) Application number: **24749558.3**

(22) Date of filing: **22.01.2024**

(51) International Patent Classification (IPC):
**H04L 5/00** (2006.01)   **H04W 72/12** (2023.01)

(52) Cooperative Patent Classification (CPC):
**H04L 5/00; H04W 72/0453; H04W 72/12**

(86) International application number:
**PCT/CN2024/073421**

(87) International publication number:
**WO 2024/160077 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.02.2023 CN 202310121494**

(71) Applicant: **Datang Mobile Communications
Equipment Co., Ltd.
Beijing 100085 (CN)**

(72) Inventor: **WANG, Junwei
Beijing 100085 (CN)**

(74) Representative: **Studio Torta S.p.A.
Via Viotti, 9
10121 Torino (IT)**

(54) **INFORMATION PROCESSING METHOD AND APPARATUS, NETWORK DEVICE, AND TERMINAL**

(57)    This disclosure provides an information processing method and apparatus, a network device and a terminal, and relates to the field of communication technologies. The method comprises: receiving, by a terminal, downlink control information (DCI) sent by a network device, wherein the DCI comprises at least one information indicator field, the information indicator field corresponding to a first parameter of each of at least two cells scheduled by the DCI; and determining, by the terminal, a value corresponding to the first parameter of a first scheduled cell according to a value indicated by N bits in the information indicator field, wherein the first scheduled cell is one of the at least two cells scheduled by the DCI; $N \leq M$, where N and M are positive integers, and M denotes the number of bits included in the information indicator field.

A terminal receives DCI sent by a network device, wherein the DCI includes at least one information indicator field corresponding to a first parameter of each of at least two cells scheduled by the DCI — 21

The terminal determines a value corresponding to the first parameter of a first scheduled cell according to a value indicated by N bits in the information indicator field, wherein the first scheduled cell is one of the at least two cells scheduled by the DCI; $N \leq M$, where N and M are positive integers, and M denotes the number of bits included in the information indicator field — 22

Fig. 2

**Description**

**CROSS-REFERENCE TO RELATED APPLICATION**

The present application claims a priority to the Chinese patent application No. 202310121494.8, titled as "information processing method and apparatus, network device, and terminal", and filed with the China National Intellectual Property Administration on February 1, 2023, the disclosure of which is incorporated herein by reference in its entirety.

**TECHNICAL FIELD**

The present disclosure relates to the field of communication technologies, in particular to an information processing method and apparatus, a network device and a terminal.

**BACKGROUND**

Downlink scheduling signaling, such as downlink control information (DCI), supports scheduling physical shared channels, including a physical downlink shared channel (PDSCH) and a physical uplink shared channel (PUSCH), in cells. When it is necessary to indicate scheduling information of a plurality of cells through the DCI, the scheduling information of the different cells may be indicated through different indicator fields in the DCI, respectively, which leads to a large overhead.

In order to reduce the signaling overhead, it is considered that the scheduling information of the plurality of cells may be indicated by one information indicator field in the DCI. However, there is no appropriate solution for a network device and a terminal to accurately ascertain the content of the scheduling information in scenarios where first parameters configured for various cells are different.

**SUMMARY**

The present disclosure provides an information processing method and apparatus, a network device and a terminal, so as to solve the problem in the related art that, when it is necessary to reduce the signaling overhead, there is no appropriate solution for a network device and a terminal to accurately ascertain the content of scheduling information.

An embodiment of the present disclosure provides an information processing method, including:

receiving, by a terminal, downlink control information (DCI) sent by a network device, wherein the DCI includes at least one information indicator field, the information indicator field corresponding to a first parameter of each of at least two cells scheduled by the DCI; and

determining, by the terminal, a value corresponding to the first parameter of a first scheduled cell according to a value indicated by N bits in the information indicator field, wherein the first scheduled cell is one of the at least two cells scheduled by the DCI; $N \leq M$, where N and M are positive integers, and M denotes the number of bits included in the information indicator field.

Optionally, the determining, by the terminal, the value corresponding to the first parameter of the first scheduled cell according to the value indicated by N bits in the information indicator field includes:

in a case where the value indicated by the N bits does not fall within a value range of the first parameter corresponding to the first scheduled cell, ignoring, by the terminal, the information indicator field; or, determining, by the terminal, a target value according to the value indicated by the N bits, and determining the target value as the value corresponding to the first parameter of the first scheduled cell;

or,

in a case where the value indicated by the N bits falls within the value range of the first parameter corresponding to the first scheduled cell, determining, by the terminal, the value indicated by the N bits as the value corresponding to the first parameter of the first scheduled cell.

Optionally, the determining, by the terminal, the target value according to the value indicated by the N bits includes:

determining, by the terminal, the target value according to the value indicated by the N bits and a maximum value of the value range of the first parameter;

or,

determining, by the terminal, a preset value, and determining the preset value as the target value, wherein the preset value is configured by higher layer signaling sent by the network device, or the preset value is defined by a protocol.

Optionally, the determining, by the terminal, the target value according to the value indicated by the N bits and the maximum value of the value range of the first parameter includes:

determining, by the terminal, the smaller of the value indicated by the N bits and the maximum value of the value range of the first parameter as the target value;
or,
determining, by the terminal, the target value through performing modulo operation on the value indicated by the N bits and the maximum value of the value range of the first parameter.

Optionally, the N is determined by the number of first parameters configured for the first scheduled cell.

Optionally, the N bits are N most significant bits (MSBs) among M bits configured for the information indicator field; or,

the N bits are N least significant bits (LSBs) among the M bits;
or,
the N bits are any N bits among the M bits.

Optionally, before the determining, by the terminal, the value corresponding to the first parameter of the first scheduled cell according to the value indicated by N bits in the information indicator field, the method further includes:

in a case where a sum of the numbers of bits occupied by the at least two cells respectively is less than or equal to a total number of bits included in the information indicator field, determining N bits in the information indicator field that correspond to the first scheduled cell;
wherein the at least two cells occupy different respective bits in the information indicator field.

Optionally, the first parameter includes at least one of:

a bandwidth part (BWP) serial number;
an antenna port number; or
a sounding reference signal (SRS) resource serial number indicator.

Optionally, in a case where the first parameter includes a BWP, the ignoring, by the terminal, the information indicator field includes:
not performing, by the terminal, a BWP switching, or maintaining, by the terminal, a currently active BWP.

Optionally, in a case where the first parameter includes an SRS resource, the ignoring, by the terminal, the information indicator field includes:
not selecting, by the terminal, any SRS resource.

Optionally, in a case where the first parameter includes an aperiodic channel state information (CSI), the ignoring, by the terminal, the information indicator field includes:
not triggering, by the terminal, reporting of the aperiodic CSI.

An embodiment of the present disclosure further provides an information processing method, including:

determining, by a network device, at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; N≤M, where N and M are positive integers, and M denotes the number of bits included in the information indicator field; and
sending, by the network device, the DCI to a terminal, wherein the DCI includes the at least one information indicator field.

Optionally, in a case where a sum of the numbers of bits occupied by the at least two cells respectively is less than or equal to a total number of bits included in the information indicator field, the at least two cells occupy different respective bits in the information indicator field.

An embodiment of the present disclosure further provides an information processing apparatus, including a memory, a transceiver and a processor;

wherein the memory is configured to store a computer program; the transceiver is configured to transmit and receive data under the control of the processor; and the processor is configured to read the computer program in the memory and perform the following steps:

receiving downlink control information (DCI) sent by a network device, wherein the DCI includes at least one information indicator field, the information indicator field corresponding to a first parameter of each of at least two cells scheduled by the DCI; and

determining a value corresponding to the first parameter of a first scheduled cell according to a value indicated by N bits in the information indicator field, wherein the first scheduled cell is one of the at least two cells scheduled by the DCI; N≤M, where N and M are positive integers, and M denotes the number of bits included in the information indicator field.

Optionally, the processor is configured to read the computer program in the memory and perform the following steps:

in a case where the value indicated by the N bits does not fall within a value range of the first parameter corresponding to the first scheduled cell, ignoring the information indicator field; or, determining a target value according to the value indicated by the N bits, and determining the target value as the value corresponding to the first parameter of the first scheduled cell;

or,

in a case where the value indicated by the N bits falls within the value range of the first parameter corresponding to the first scheduled cell, determining the value indicated by the N bits as the value corresponding to the first parameter of the first scheduled cell.

Optionally, the processor is configured to read the computer program in the memory and perform the following steps:

determining the target value according to the value indicated by the N bits and a maximum value of the value range of the first parameter;

or,

determining a preset value, and determining the preset value as the target value, wherein the preset value is configured by higher layer signaling sent by the network device, or the preset value is defined by a protocol.

Optionally, the processor is configured to read the computer program in the memory and perform the following steps:

determining the smaller of the value indicated by the N bits and the maximum value of the value range of the first parameter as the target value;

or,

determining the target value through performing modulo operation on the value indicated by the N bits and the maximum value of the value range of the first parameter.

Optionally, the N is determined by the number of first parameters configured for the first scheduled cell.

Optionally, the N bits are N most significant bits (MSBs) among M bits configured for the information indicator field;

or,

the N bits are N least significant bits (LSBs) among the M bits;

or,

the N bits are any N bits among the M bits.

Optionally, the processor is configured to read the computer program in the memory and perform the following step:

in a case where a sum of the numbers of bits occupied by the at least two cells respectively is less than or equal to a total number of bits included in the information indicator field, determining N bits in the information indicator field that correspond to the first scheduled cell;

wherein the at least two cells occupy different respective bits in the information indicator field.

Optionally, the first parameter includes at least one of:

a bandwidth part (BWP);
an antenna port; or
a sounding reference signal (SRS) resource.

Optionally, the processor is configured to read the computer program in the memory and perform the following step:
in a case where the first parameter includes a BWP, not performing a BWP switching, or maintaining a currently active BWP.

Optionally, the processor is configured to read the computer program in the memory and perform the following step:
in a case where the first parameter includes an SRS resource, not selecting any SRS resource.

Optionally, the processor is configured to read the computer program in the memory and perform the following step:
in a case where the first parameter includes an aperiodic channel state information (CSI), not triggering reporting of the aperiodic CSI.

An embodiment of the present disclosure further provides a terminal, including:

a receiving unit, configured to receive downlink control information (DCI) sent by a network device, wherein the DCI includes at least one information indicator field, the information indicator field corresponding to a first parameter of each of at least two cells scheduled by the DCI; and
a first processing unit, configured to determine a value corresponding to the first parameter of a first scheduled cell according to a value indicated by N bits in the information indicator field, wherein the first scheduled cell is one of the at least two cells scheduled by the DCI; $N \leq M$, where N and M are positive integers, and M denotes the number of bits included in the information indicator field.

An embodiment of the present disclosure further provides an information processing apparatus, including a memory, a transceiver and a processor;
wherein the memory is configured to store a computer program; the transceiver is configured to transmit and receive data under the control of the processor; and the processor is configured to read the computer program in the memory and perform the following steps:

determining at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; $N \leq M$, where N and M are positive integers, and M denotes the number of bits included in the information indicator field; and
sending the DCI to a terminal, wherein the DCI includes the at least one information indicator field.

Optionally, in a case where a sum of the numbers of bits occupied by the at least two cells respectively is less than or equal to a total number of bits included in the information indicator field, the at least two cells occupy different respective bits in the information indicator field.

An embodiment of the present disclosure further provides a network device, including:

a processing unit configured to determine at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; $N \leq M$, where N and M are positive integers, and M denotes the number of bits included in the information indicator field; and
a first sending unit configured to send the DCI to a terminal, wherein the DCI includes the at least one information indicator field.

An embodiment of the present disclosure further provides a processor-readable storage medium storing a computer program, wherein the computer program is configured to cause a processor to perform the steps of the information processing method at a terminal side, or the computer program is configured to cause the processor to perform the steps of the information processing method at a network device side.

The above technical solutions of the present disclosure achieve the following advantageous effects.

In the embodiments of the present disclosure, a terminal receives DCI sent by a network device, wherein the DCI includes at least one information indicator field, the information indicator field corresponding to a first parameter of each of at least two cells scheduled by the DCI. Next, the terminal determines a value corresponding to the first parameter of a first scheduled cell according to a value indicated by N bits in the information indicator field. This achieves the scheduling of the first parameter of each of a plurality of cells through the information indicator field in the DCI, which helps reduce the signaling overhead and ensures that the terminal and the network device can accurately ascertain the content of scheduling information.

**BRIEF DESCRIPTION OF THE DRAWINGS**

Fig. 1A illustrates a schematic diagram of information indicator field types.

Fig. 1B illustrates another schematic diagram of information indicator field types.

Fig. 1C illustrates yet another schematic diagram of information indicator field types.

Fig. 2 illustrates a schematic diagram of an information processing method at a terminal side according to an embodiment of the present disclosure.

Fig. 3 illustrates a schematic diagram of an information processing method at a network device side according to an embodiment of the present disclosure.

Fig. 4 illustrates a schematic diagram of a BWP switching scheduled by DCI according to an embodiment of the present disclosure.

Fig. 5 illustrates a schematic diagram of reading of an information indicator field according to an embodiment of the present disclosure.

Fig. 6 illustrates another schematic diagram of reading of an information indicator field according to an embodiment of the present disclosure.

Fig. 7A illustrates yet another schematic diagram of reading of an information indicator field according to an embodiment of the present disclosure.

Fig. 7B illustrates still another schematic diagram of reading of an information indicator field according to an embodiment of the present disclosure.

Fig. 8 illustrates a block diagram of an information processing apparatus at a terminal side according to an embodiment of the present disclosure.

Fig. 9 illustrates a block diagram of a terminal according to an embodiment of the present disclosure.

Fig. 10 illustrates a block diagram of an information processing apparatus at a network device side according to an embodiment of the present disclosure.

Fig. 11 illustrates a block diagram of a network device according to an embodiment of the present disclosure.

**DETAILED DESCRIPTION**

In order that the technical problem to be solved by the present disclosure, the technical solutions and the advantages are clearer, a detailed description will be given below in conjunction with the drawings and the specific embodiments. In the following description, particular details such as specific configurations and components are provided only to help comprehensive understanding of embodiments of the present disclosure. Therefore, those skilled in the art should understand that various changes and modifications can be made to the embodiments described herein without departing from the scope and the spirit of the present disclosure. In addition, descriptions of known functions and configurations are omitted for clarity and conciseness.

It should be understood that "an embodiment" or "one embodiment" mentioned throughout the specification means that particular features, structures, or characteristics related to an embodiment are included in at least one embodiment of the present disclosure. Therefore, "in an embodiment" or "in one embodiment" occurring throughout the specification do not necessarily refer to the same embodiment. In addition, these particular features, structures, or characteristics may be combined in any suitable manner in one or more embodiments.

In various embodiments of the present disclosure, it should be understood that sequence numbers of the following processes do not mean execution orders, and the execution order of each process should be determined by its function and internal logic, and should not constitute any limitation to the implementation process of an embodiment of the present disclosure.

In addition, the terms "system" and "network" are usually used interchangeably herein.

The technical solutions according to the embodiments of the present disclosure are applicable to various systems, in particular 5G systems. For example, the applicable system may be a global system of mobile communication (GSM) system, a code division multiple access (CDMA) system, a wideband code division multiple access (WCDMA), a general packet radio service (GPRS) system, a Long Term Evolution (LTE) system, an LTE frequency division duplex (FDD) system, an LTE time division duplex (TDD) system, a Long Term Evolution Advanced (LTE-A) system, a universal mobile telecommunication system (UMTS), a worldwide interoperability for microwave access (WiMAX) system, a 5G New Radio (NR) system, etc. These various systems each include a terminal device and a network device. The system may further include a core network part, such as an evolved packet system (EPS), a 5G System (5GS), etc.

The network device and the terminal device may each use one or more antennas to perform multi input multi output (MIMO) transmission, which may be single user MIMO (SU-MIMO) or multiple user MIMO (MU-MIMO). Depending on the form and the number of the antenna combinations, the MIMO transmission may be 2-dimension MIMO (2D MIMO), 3-dimension MIMO (3D MIMO), full dimension MIMO (FD-MIMO) or massive-MIMO, and may also be diversity transmission or precoding transmission or beamforming transmission, etc.

In the embodiments of the present disclosure, the term "and/or" is only an association relationship that describes associated objects, indicating that there may be three relationships. For example, A and/or B may mean that A exists alone, A and B both exist, or B exists alone. The character "/" generally indicates that the contextually associated objects are in an "or" relationship.

In the embodiments of the present disclosure, the term "a plurality of" refers to two or more, and other quantifiers are similar.

The technical solutions in the embodiments of the present disclosure will be clearly and thoroughly described below with reference to the drawings for the embodiments of the present disclosure. Obviously, those described are only parts, rather than all, of the embodiments of the present disclosure. Based on the embodiments of the present disclosure, any other embodiment obtained by those of ordinary skill in the art without paying any creative effort should fall within the protection scope of the present disclosure.

Relevant content involved in the present disclosure is introduced below.

1. The basic concept of a bandwidth part (BWP)

In order to meet the requirements of terminals on flexibility of communication bandwidths (e.g., a communication bandwidth of 5 MHz is required at timing t1, and a communication bandwidth of 10 MHz is required at timing t2, with an interval between t1 and t2 being tens or hundreds of milliseconds), the concept of BWP is proposed based on carriers. One carrier may be configured with a plurality of BWPs (the bandwidth of each BWP falls within a bandwidth range of the carrier), and a base station and a terminal dynamically select one BWP according to the bandwidth requirement during communication, and perform communication on the selected BWP. The operations on the BWP are described as follows.

(1) BWP configuration and BWP dynamic switching

On a carrier, a base station may configure 1 to 4 BWPs for user equipment (UE, also called a terminal). For example, carrier-1 is configured with four BWPs (BWP-0, BWP-1, BWP-2, BWP-3). For example, carrier -2 is configured with two BWPs (BWP-0 and BWP-1). Transmission parameters may be independently configured for each BWP.

When a carrier is configured with a plurality of BWPs, a BWP where the terminal and the base station can communicate information is called an active BWP. When the currently active BWP (e.g., BWP-1) cannot meet the requirements on traffic transmission, the base station may indicate the activation of a new BWP through scheduling signaling (e.g. DCI) (also called a BWP switching command). When receiving the indication of the activation of the new BWP, the terminal performs BWP switching, where the signaling in the DCI that indicates the BWP switching is as follows: BWP indicator: the number of occupied bits is 0, 1 or 2; here, the number of occupied bits is determined according to the number of BWPs $n_{\text{BWP,RRC}}$ configured by the base station, that is, the number of occupied bits is $\left\lceil \log_2\left(n_{\text{BWP}}\right) \right\rceil$, and the $\left\lceil \log_2\left(n_{\text{BWP}}\right) \right\rceil$ bits are used to indicate a serial number of a BWP.

It should be noted that when the terminal switches to a new BWP, such as from BWP-1 to BWP-2, it is considered that BWP-2 is activated, that is, BWP-2 is in an activate state, while BWP-1 is de-activated, that is, BWP-1 is in an inactive state.

(2) Transmission parameter configuration based on the BWP

In the NR technology, most of the transmission parameters between the terminal and the base station are configured based on the BWPs, that is, these transmission parameters are independently configured for different BWPs. When a BWP is active, the data transmission between the terminal and the base station adopt the configuration parameters of the active BWP. However, the configuration parameters of different BWPs will affect an information length of an information indicator field in scheduling signaling (such as the DCI) and meanings of the indicator. The information indicator fields related to this technology are described below. Table 1 shows downlink scheduling information indicator fields, and Table 2 shows uplink scheduling information indicator fields.

Table 1

| information indicator field | Length of information indicator field (number of bits) | Dependent parameters (based on the BWP) | Remarks |
|---|---|---|---|
| BWP identity number indicator (BWP ID) | 0, 1, 2 | The number of configured candidate BWPs in a carrier | determined by the number of BWPs $n_{BWP,RRC}$, and has $\left\lceil \log_2(n_{BWP}) \right\rceil$ bits |
| Mapping from virtual radio bearer (VRB) to physical radio bearer (PRB) (VRB-to-PRB mapping) | 0, 1 | Resource allocation type, which indicates whether higher layer signaling configures an interleaving indicator | 1 bit: the resource allocation is of type -1, and higher layer signaling configures an interleaving indicator |
| PRB bundling size indicator | 0, 1 | PRB bundling type | 1 bit: the PRB bundling type is dynamically indicated |
| Antenna port(s) | 4, 5, 6 | Antenna port configuration | The number of bits of the information indicator field varies with the number of antenna ports |
| Demodulation reference signal (DMRS) sequence initialization | 1 | Fixed 1 bit | |

Table 2

| information indicator field | Length of information indicator field (number of bits) | Dependent parameters (based on the BWP) | Remarks |
|---|---|---|---|
| Antenna port(s)) | 2, 3, 4, 5 | Antenna port configuration, whether precoding is adopted for uplink transmission | The number of bits in the information indicator field varies with the number of antenna ports; this field indicates an antenna port number |
| DMRS sequence initialization | 0, 1 | Whether precoding is configured | 1 bit, if precoding is not configured |
| Frequency hopping flag | 0, 1 | Resource allocation type, which indicates whether higher layer signaling configures a frequency hopping flag | 1 bit: the resource allocation is of type -1, and higher layer signaling configures a frequency hopping flag |

(continued)

| information indicator field | Length of information indicator field (number of bits) | Dependent parameters (based on the BWP) | Remarks |
|---|---|---|---|
| Open-loop power control parameter set indicator | 0, 1, 2 | Configuration of the number of lists of open-loop power control parameter sets, which indicates whether there is an SRS resource indicator in scheduling signaling | 0 bit: if higher layer signaling does not configure a P0 power set list of PUSCH 1 bit: there is an SRS resource indicator in SRS scheduling signaling, or a set list indicator is 1 2 bits: a set list indicator is 2, and there is no SRS resource indicator in SRS scheduling signaling |
| SRS resource indicator | 0, 1, 2, 3, 4 | Depending on an uplink transmission mechanism (codebook-based transmission, or non-codebook-based transmission). Based on a maximum number of layers Lmax for uplink transmission | This field indicates an SRS resource serial number indicator |

When PDSCH data or PUSCH data of a plurality of cells are scheduled in one DCI, it is necessary to indicate scheduling signaling of each scheduled carrier. Several different signaling indicator types which support multi-cell scheduling are introduced as follows.

Type 2: the indicator information includes a plurality of information indicator fields, a length L of which is equal to a sum of the numbers of bits required by all configured cells, e.g., L = sum ($L_0$, $L_1$, ... $L_{C-1}$). Each scheduled cell has an independent information indicator field.

Type-1B: there is only one information indicator field, a length L of which is determined according to an indicator entry length N configured by the RRC, e.g., $L = \text{Log}_2\lceil N \rceil$. For different scheduled carriers, the indicators correspond to different values.

Type-1A: there is only one information indicator field, a length L of which is equal to the number of bits of indicator information of a cell with a maximum number of bits of indicator information among a plurality of cells, e.g., L = max ($L_0$, $L_1$, ... $L_{C-1}$). For different scheduled carriers, the indicators correspondi to the same value.

The above different indicator types are explained by taking the BWP ID indicator as an example. The following description takes a case where two cells are scheduled in total during multi-cell scheduling as an example.

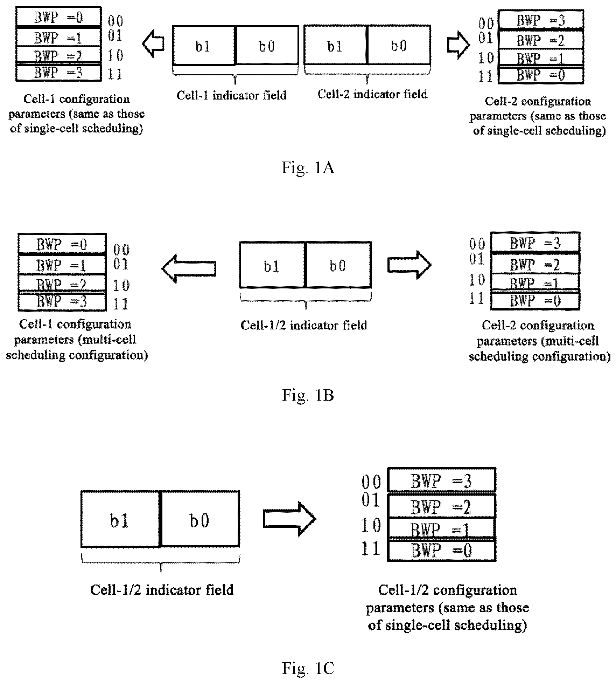

As illustrated in Fig. 1A, for the information indicator field of Type 2, there are respective information indicator fields for cell-1 and cell-2, that is, indication is performed independently for each scheduled cell. The interpretation method of the information indicator field is the same as that in single-cell scheduling.

As illustrated in Fig. 1B, for the information indicator field of Type 1B, cell-1 and cell-2 share one information indicator field, but each carrier index may correspond to different parameters. The related parameters are separately configured by RRC messages of the base station (which is a new RRC configuration table compared to single-cell scheduling), that is, the interpretation method may be different from that in single-cell scheduling.

As illustrated in Fig. 1C, for the information indicator field of Type 1A, cell-1 and cell-2 share one information indicator field, and an index value table indicated thereby and the manner by which the information indicator field is interpreted are the same as those in single-cell scheduling.

In the field of the scheduling signaling, when multi-cell scheduling information is indicated using the method of Type 1A, the network device side and the terminal side can accurately interpret the scheduling information in a case where the indicator entry length N (entity, or called a combinatorial number N) corresponding to each scheduled cell is the same. However, in a case where different cells have different indicator entry lengths N, how to accurately read the scheduling information for each cell by the network device side and the terminal side needs to be further solved. The typical problems are described below by taking a BWP ID indicator and an antenna port indicator as examples.

Problem 1: (the BWP ID indicator is taken as an example to explain the problem to be solved in the case of the indicator of Type 1A)

For example, cell-1 is configured with three BWPs, i.e., BWP ID=0, BWP ID=1 and BWP ID=2; and cell-2 is configured with four BWPs, i.e., BWP ID=0, BWP ID=1, BWP ID=2, and BWP ID=3.

For the indicator of Type 1A, the base station uses one 2-bit indicator field to indicate the BWPs, and the corresponding relationship is shown in Table 3 below.

Table 3

| BWP ID (information indicator field of Type 1A) | Interpretation of cell-1 | Interpretation of cell-2 | Remarks |
|---|---|---|---|
| 00 | BWP ID=0 | BWP ID=0 | |
| 01 | BWP ID=1 | BWP ID=1 | |
| 10 | BWP ID=2 | BWP ID=2 | |
| 11 | Uninterpretable | BWP ID=3 | Cell-1 is configured with three BWPs |

To be noted, the above-mentioned cell-1 is configured with three BWPs, with an effective indicator range of 0, 1, 2; when the DCI of the base station indicates 3 (binary 11), since the value of the DCI is greater than 2 and exceeds the effective range of cell-1 (i.e., the value indicated by the DCI is not within the effective range of 0 to 2), cell-1 cannot interpret the indicator field of the BWP serial number.

Problem 2: (the antenna port indicator is taken as an example to explain the problem to be solved in the case of the indicator of Type 1A)

For example, for the currently active BWP of cell-1, the antenna port indicator field uses 5 bits (supporting the scheduling of up to two codewords); and the scheduling signaling indicates 1-codeword transmission.

For the currently active BWP of cell-2, the antenna port indicator field uses 5 bits (supporting the scheduling of up to two codewords); and the scheduling signaling indicates 2-codeword transmission.

As shown in Table 4 below, although the antenna port indicator fields of both cells are 5 bits, the effective indicator range for cell-1 is 0 to 30, and the effect indicator range for cell-2 is 0 to 3. That is, when the indicator range for the antenna port is greater than 3, the effective indicator range is exceeded (i.e., the value indicated by the DCI is not within an effective value range), and cell-2 cannot interpret the indicator.

Table 4

| 1-codeword transmission | | | | 2-codeword transmission | | | |
|---|---|---|---|---|---|---|---|
| Index value | Number of groups of DMRS code division multiplexing (CDM) without data | DMRS port | Number of front-load symbols | Index value | Number of groups of DMRS CDM without data | DMRS port | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4-31 | Reserved | Reserved | Reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |

(continued)

| | 1-codeword transmission | | | 2-codeword transmission | | | |
|---|---|---|---|---|---|---|---|
| Index value | Number of groups of DMRS code division multiplexing (CDM) without data | DMRS port | Number of front-load symbols | Index value | Number of groups of DMRS CDM without data | DMRS port | Number of front-load symbols |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | Reserved | Reserved | Reserved | | | | |

At present, for the indication method of Type 1A, when the indicator entry length N (entity, or called a combinatorial number N) corresponding to each scheduled cell is different, there is no relevant technical method for reading the information indicator field of each cell.

The embodiments of the present disclosure provide an information processing method and apparatus, a network device and a terminal, so as to solve the problem that when it is necessary to reduce the signaling overhead, there is no appropriate solution for a network device and a terminal to accurately ascertain the content of scheduling information. In which, the method and the apparatus (or the terminal or the network device) are based on the same application concept. Since the principles by which the method and the apparatus (or the terminal or the network device) solve the problem are similar, the implementations of the apparatus and the method can refer to each other, and the repeated content will not be described again.

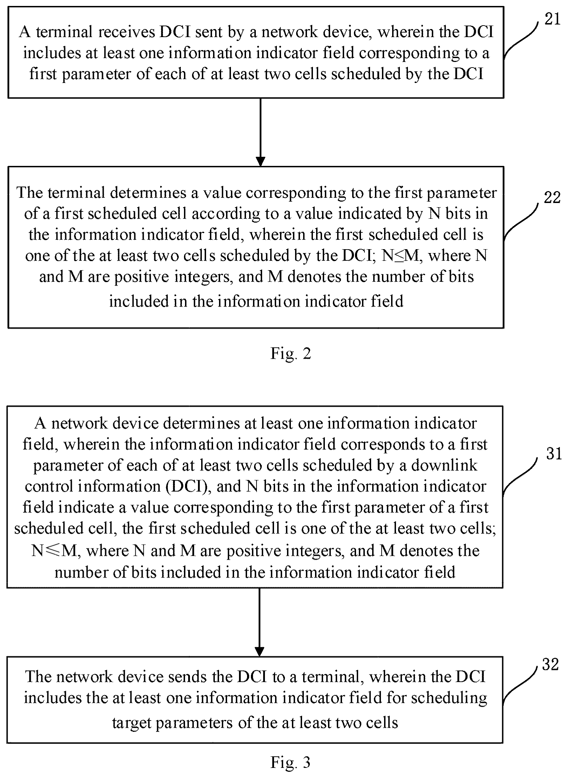

As illustrated in Fig. 2, an embodiment of the present disclosure provides an information processing method, which specifically includes the following steps 21 and 22.

Step 21: a terminal receives downlink control information (DCI) sent by a network device, wherein the DCI includes at least one information indicator field, the information indicator field corresponding to a first parameter of each of at least two cells scheduled by the DCI.

Optionally, the first parameter includes, but is not limited to, at least one of a BWP, an antenna port, or a sounding reference signal (SRS) resource, etc. For example, one information indicator field in the DCI may be used to schedule the first parameter of at least two cells. Taking the BWP as an example, one information indicator field in the DCI may be used to schedule the BWPs of at least two cells.

Step 22: the terminal determines a value corresponding to the first parameter of a first scheduled cell according to a value indicated by N bits in the information indicator field, wherein the first scheduled cell is one of the at least two cells scheduled by the DCI; N≤M, where N and M are positive integers, and M denotes the number of bits included in the information indicator field.

For example, when an information indicator field in the DCI is configured with M bits, i.e., the information indicator field includes M bits, the N bits may be all the M bits in the information indicator field; or the N bits are N most significant bits among the M bits configured for the information indicator field; or the N bits are N least significant bits among the M bits; or the N bits are any N bits among the M bits, etc., which is not limited in the embodiments of the present disclosure.

Taking the BWP as an example, it is assumed that 3 BWPs (including BWP0, BWP1, and BWP2) are configured for the first scheduled cell. According to the value indicated by N bits, it is possible to determine the value corresponding to the first parameter of the first scheduled cell, i.e., one of BWP0, BWP1 or BWP2.

In the above solution of the present disclosure, a terminal receives DCI sent by a network device, wherein the DCI includes at least one information indicator field, the information indicator field corresponding to a first parameter of each of at least two cells scheduled by the DCI. Next, the terminal determines a value corresponding to the first parameter of a first scheduled cell according to a value indicated by N bits in the information indicator field. This achieves the scheduling of the first parameter of each of a plurality of cells through the information indicator field in the DCI, which helps reduce the signaling overhead and ensures that the terminal and the network device can accurately ascertain the content of scheduling information.

Optionally, the terminal may directly or indirectly determine the value corresponding to the first parameter of the first scheduled cell according to the value indicated by the N bits in the information indicator field. Specifically, the step in which the terminal determines the value corresponding to the first parameter of the first scheduled cell according to the value indicated by the N bits in the information indicator field includes:

in a case where the value indicated by the N bits does not fall within a value range of the first parameter configured for the first scheduled cell, the terminal ignores the information indicator field;
or,
the terminal determines a target value according to the value indicated by the N bits, and determines the target value as a value corresponding to the first parameter of the first scheduled cell; optionally, the target value does not fall within the value range of the first parameter; for example, in a case where the value indicated by the N bits does not fall within the value range of the first parameter configured for the first scheduled cell, the terminal may determine a target value according to the value indicated by the N bits, and determines the target value as a value corresponding to the first parameter of the first scheduled cell;
or,
in a case where the value indicated by the N bits falls within the value range of the first parameter corresponding to the first scheduled cell, the terminal determines the value indicated by the N bits as the value corresponding to the first parameter of the first scheduled cell.

For example, when the value indicated by the N bits does not fall within the value range of the first parameter corresponding to the first scheduled cell, it means that the value indicated by the N bits is greater than a maximum value of the value range. Taking the BWP as an example, when two BWPs, including BWP0 and BWP1, are configured for the first scheduled cell, the value range configured for the first scheduled cell is 0 to 1. When the value indicated by the N bits is 2 or 3 or 4, etc., it is considered that the value indicated by the N bits does not fall within the value range of the first parameter corresponding to the first scheduled cell. When the value indicated by the N bits is 0 or 1, it is considered that the value indicated by the N bits falls within the value range of the first parameter corresponding to the first scheduled cell.

Optionally, when ignoring the information indicator field, the terminal may not perform related scheduling processing for the scheduling indicator (i.e., the DCI) of the network device. Taking the BWP as an example, when the terminal ignores the information indicator field, it means that the terminal does not perform a BWP switching, or maintains a currently active BWP. Taking an SRS resource indicator that triggers an SRS dynamic transmission as an example, when the terminal ignores the information indicator field, it means that no SRS resource is selected, that is, the terminal does not send any SRS. Taking an aperiodic channel state information (CSI) reporting indicator as an example, when the terminal ignores the information indicator field, it means that the terminal does not trigger the reporting of any aperiodic CSI, etc.

Optionally, the step in which the terminal determines a target value according to the value indicated by the N bits includes:

mode 1: the terminal determines the target value according to the value indicated by the N bits and a maximum value of the value range of the first parameter;
or,
mode 2: the terminal determines a preset value and determines the preset value as the target value. Optionally, the preset value is configured by higher layer signaling sent by the network device, or the preset value is defined by a protocol.

In addition, the step in which the terminal determines a target value according to the value indicated by the N bits may further include: the terminal determines the target value according to the value indicated by the N bits and a minimum value in the value range of the first parameter. For example, the target value is min (type1A-indi, cell-indi-min), where type1A-indi is the value indicated by the N bits, and cell-indi-min is the minimum value in the value range of the first parameter, which are not limited in the embodiments of the present disclosure.

For example, in the mode 1, when the value indicated by the N bits does not fall within the value range of the first parameter configured for the first scheduled cell, that is, the value indicated by the N bits is greater than the maximum value of the value range of the first parameter, the target value may be determined according to the value indicated by the N bits and the maximum value of the value range of the first parameter. Specifically, the step in which the terminal determines the target value according to the value indicated by the N bits and the maximum value of the value range of the first parameter includes:

the terminal determines the smaller of the value indicated by the N bits and the maximum value of the value range of the first parameter as the target value; for example, the target value is min (type1A-indi, cell-indi-max), where type1A-indi is the value indicated by the N bits, and cell-indi-max is the maximum value of the value range of the first parameter;

or,

the terminal performs modulo operation through the value indicated by the N bits and the maximum value of the value range of the first parameter to determine the target value; for example, the target value is mod (type1A-indi, cell-indi-max+K), where K is a constant, such as 0 or 1 or any other value, which may be specifically determined according to a numbering mode of the first parameter; for example, when the numbering mode is to start from 0, K may be 1, etc., which is not limited in the embodiments of the present disclosure.

For example, in the mode 2, the preset value is configured by higher layer signaling sent by the network device (e.g., the higher layer signaling may be radio resource control (RRC) signaling or any other higher layer signaling, etc.), or the preset value is defined by a protocol. The preset value (i.e., a default value) may be pre-configured, or defined by a protocol. Optionally, in a case where the value indicated by the N bits does not fall within the value range of the first parameter configured for the first scheduled cell, the terminal determines a preset value corresponding to the value indicated by the N bits. In an implementation, when the value indicated by the N bits do not fall within the value range of the first parameter configured for the first scheduled cell, the terminal directly determines a preset value, takes the preset value as a target value, and determines the target value as a value corresponding to the first parameter of the first scheduled cell. Taking the BWP as an example, the default value (i.e., the preset value) corresponding to the BWP may be the value corresponding to the first active BWP. When the value indicated by the N bits exceeds the configured value range of the BWP, the terminal determines that the DCI schedules the first active BWP of the first scheduled cell. Alternatively, in another implementation, a preset value corresponding to the value indicated by the N bits may be determined according to a mapping relationship between the preset value and a value which is pre-configured or a value defined by a protocol as not being within the value range of the first parameter corresponding to the first scheduled cell. For example, when there are a plurality of reserved states (values not expected to be indicated in single-carrier scheduling) in the information indicator field of a carrier, a plurality of default values (i.e., predetermined values) may be configured by the network or defined by a protocol, and each default value corresponds to one of the reserved states. Taking the antenna ports as an example, for 2-codeword transmission, index numbers 4 to 31 indicate reserved states, and a default value (i.e. a predetermined value) corresponding to each index number among the index numbers 4 to 31 may be pre-configured, or defined by a protocol. For example, the index number 4 corresponds to a default value 0, the index number 5 corresponding to a default value 1, and so on. When the value indicated by the N bits is in a range of 4 to 31, the value corresponding to the scheduled first parameter may be determined according to a pre-configured relationship between the index number and the default value.

Optionally, the N is determined by the number of first parameters configured for the first scheduled cell. Taking the BWP as an example, $N = \lceil \log_2(n_{BWP}) \rceil$ , where $(n_{BWP})$ is the number of first parameters configured for the first scheduled cell.

Optionally, before the step in which the terminal determines the value corresponding to the first parameter of the first scheduled cell according to the value indicated by N bits in the information indicator field, the method further includes:

in a case where a sum of the numbers of bits occupied by the at least two cells respectively is less than or equal to a total number of bits included in the information indicator field, determining N bits in the information indicator field that correspond to the first scheduled cell;

wherein the at least two cells occupy different respective bits in the information indicator field.

Taking an information indication method of Type 1A as an example, the number of bits M in the information indicator field may be determined according to a maximum number of bits occupied by a single cell among all configured cells, i.e., M = max $(M_0, M_1, ... M_{C-1})$, where $M_i$ is the number of bits occupied by a configured cell. For example, when the total number of bits configured for the information indicator field is M=4, and the at least two cells actually scheduled include cell-1 and cell-2, which each occupy 2 bits (i.e., the total number of bits occupied by cell-1 and cell-2 does not exceed the total number of bits configured for the information indicator field), different bits in the information indicator field may be allocated to different cells. For example, cell-1 may be indicated by bit 0 and bit 1, and cell-2 may be indicated by bit 2 and bit 3. In this way, when the sum of the number of bits occupied by the cells actually scheduled is less than the total number of bits configured for the information indicator field, by enabling the respective cells to occupy different bits in the information indicator field, it is possible to ensure that the terminal and the network device can accurately obtain the scheduling information without increasing the signaling overhead.

In the above solution of the present disclosure, the first parameter of each of a plurality of cells is scheduled by a single information indicator field to reduce the signaling overhead, and when the entry length of the information indicator field corresponding to each scheduled cell (i.e., the number of bits occupied by each cell) is different, the above embodiment of the present disclosure can ensure that the terminal and the network device can accurately obtain the scheduling information, increase the flexibility of the scheduling information, and ensure that the multi-cell scheduling can be effectively carried out, thereby increasing the user's communication rate and improving the user experience.

The terminal (also called terminal device) involved in the embodiments of the present disclosure may refer to a device providing voice and/or data connectivity to a user, a handheld device having a wireless connection function, any other processing device connected to a wireless modem, etc. In different systems, the name of the terminal device may be different, and for example, in a 5G system, the terminal device may be referred to as user equipment (UE). The wireless terminal device may be communicated with one or more core networks (CNs) via a radio access network (RAN). The wireless terminal device may be a mobile terminal device such as a mobile phone (or referred to as a "cellular" phone) or a computer with a mobile terminal device, such as a portable, pocket-sized, handheld, computer-embedded or vehicle-mounted mobile device, which exchanges speech and/or data with the radio access network. For example, the terminal device may be a personal communication service (PCS) phone, a cordless phone, a session initiated protocol (SIP) phone, a wireless local loop (WLL) station, a personal digital assistant (PDA), or the like. The wireless terminal device may also be referred to as a system, a subscriber unit, a subscribe station, a mobile station, a mobile, a remote station, an access point, a remote terminal, an access terminal, a user terminal, a user agent, and a user device, which are not limited in the embodiments of the present disclosure.

As illustrated in Fig. 3, an embodiment of the present disclosure provides an information processing method, which includes the following steps 31 and 32.

Step 31: a network device determines at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; N≤M, where N and M are positive integers, and M denotes the number of bits included in the information indicator field.

Step 32: the network device sends the DCI to a terminal, wherein the DCI includes the at least one information indicator field.

Optionally, the information processing method further includes:

the network device sends higher layer signaling to the terminal, the higher layer signaling carrying indicator information which indicates a preset value;
wherein in a case where the value indicated by the N bits does not fall within a value range of the first parameter corresponding to the first scheduled cell, and the preset value indicates the value corresponding to the first parameter of the first scheduled cell.

Optionally, the N is determined by the number of first parameters configured for the first scheduled cell.

Optionally, the N bits are N most significant bits (MSBs) among M bits configured for the information indicator field;
or,

the N bits are N least significant bits (LSBs) among the M bits;
or,
the N bits are any N bits among the M bits.

Optionally, in a case where a sum of the numbers of bits occupied by the at least two cells respectively is less than or equal to a total number of bits included in the information indicator field, the at least two cells occupy different respective bits in the information indicator field.

Optionally, the first parameter includes at least one of:

a bandwidth part (BWP);
an antenna port; or
a sounding reference signal (SRS) resource.

In some embodiments, in a case where the first parameter includes a BWP, the terminal ignores the information indicator field, including:
the terminal does not perform a BWP switching, or maintains an operation on a currently active BWP.

In some embodiments, in a case where the first parameter includes an SRS resource, the terminal ignores the information indicator field, including:
the terminal does not select any SRS resource.

In some embodiments, in a case where the first parameter includes an aperiodic channel state information (CSI), the terminal ignores the information indicator field, including:
the terminal does not trigger reporting of the aperiodic CSI.

It should be noted that in the embodiments of the present disclosure, when ignoring the information indicator field, the terminal may not perform related scheduling processing for the scheduling indicator (i.e., the DCI) of the network device. Taking the BWP as an example, when the terminal ignores the information indicator field, it means that the terminal does not perform a BWP switching, or maintains a currently active BWP. Taking an SRS resource indicator that triggers an SRS dynamic transmission as an example, when the terminal ignores the information indicator field, it means that no SRS resource is selected, that is, the terminal does not send any SRS. Taking an aperiodic channel state information (CSI) reporting indicator as an example, when the terminal ignores the information indicator field, it means that the terminal does not trigger the reporting of any aperiodic CSI, etc.

It should be noted that the information processing method at the network device side according to the embodiments of the present disclosure corresponds to the aforementioned information processing method at the terminal side, with the embodiments thereof being referred to each other, and achieve the same technical effect, so the repeated content will not be described again.

The network device involved in the embodiments of the present disclosure may be a base station, which may include a plurality of cells that provide services to the terminal. Depending on the specific application scenarios, the base station may also be referred to as an access point, or a device in an access network which is communicated with the wireless terminal device over an air interface through one or more sectors, or have other names. The network device may be used to exchange the received air frames with an Internet Protocol (IP) packet, so as to serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (base transceiver station, BTS) in global system for mobile communications (GSM) or code division multiple access (CDMA), or a network device (NodeB) in wide-band dode division multiple access (WCDMA), or an evolutional network device (evolutional NodeB, eNB or e-NodeB) in a Long Term Evolution (LTE) system, or a 5G base station (gNB) in a 5G network architecture (next generation system), or a Home evolved Node B (HeNB), a relay node, a femto, a pico, etc., which is not limited in the embodiments of the present disclosure. In some network architectures, the network device may include a centralized unit (CU) node and a distributed unit (DU) node, and a CU and a DU may also be geographically separated.

The method of the present disclosure is described below in conjunction with the specific embodiments.

Embodiment 1

Taking the BWP ID indicator as an example, this embodiment illustrates a processing method for a case where a value indicated by N bits in an information indicator field of Type 1A is not within a value range of a BWP ID configured for a certain carrier (or cell).

For example, a cell set for multi-cell scheduling includes: cell-1, cell-2 and cell-3, wherein

cell-1 is configured with two BWPs, i.e., BWP ID=0 and BWP ID=1;
cell-2 is configured with three BWPs, i.e., BWP ID=0, BWP ID=1 and BWP ID=2; and
cell-3 is configured with four BWPs, i.e., BWP ID=0, BWP ID=1, BWP ID=2 and BWP ID=3.

According to the above configurations, the methods for the three configured cells in Embodiment 1 of the present disclosure to read the BWP IDs are shown in Table 1-1 below.

Table 1-1

| BWP ID (information indicator field of Type 1A) | Cell-1 (read 1 MSB) | Interpretation of cell-2 (read all 2 bits) | Interpretation of cell-3 (read all 2 bits) |
|---|---|---|---|
| 00 (decimal 0) | BWP ID=0 | BWP ID=0 | BWP ID=0 |
| 01 (decimal 1) | BWP ID=0 | BWP ID=1 | BWP ID=1 |
| 10 (decimal 2) | BWP ID=1 | BWP ID=2 | BWP ID=2 |
| 11 (decimal 3) | BWP ID=1 | Reserved: ignore the indicator | BWP ID=3 |

To be noted, the MSB is the abbreviation of the most significant bit. In a binary number, MSB is a highest weighted bit, which is similar to a leftmost digit in a decimal number. Typically, the MSB is located at a leftmost side of a binary number, while a least significant bit (LSB) is located at a rightmost side of the binary number.

For cell-1: since two BWPs are configured, one of the two BWPs may be indicated using 1 bit, and 1 MSB of the information indicator field may be read (of course, 1 LSB may also be read), which is not limited here (note: the method for determining the number of bits is $\left\lceil \log_2(n_{\mathrm{BWP}}) \right\rceil$, where $n_{\mathrm{BW,RRC}}$=2).

For cell-2: since three BWPs are configured, one of the three BWPs may be indicated using 2 bits, i.e., all 2 bits of the information indicator field are read, but the indicator is ignored when the information indicator field is 0b11. For cell-2, in a case where the BWP ID indicator is ignored, the carrier may consider that the active BWP ID of the currently scheduled cell has not changed (or a BWP switching process does not occur due to the scheduling signaling).

For cell-3: since four BWPs are configured, one of the four BWPs may be indicated using 2 bits, i.e., all 2 bits of the information indicator field are read, and all indicator states are effective.

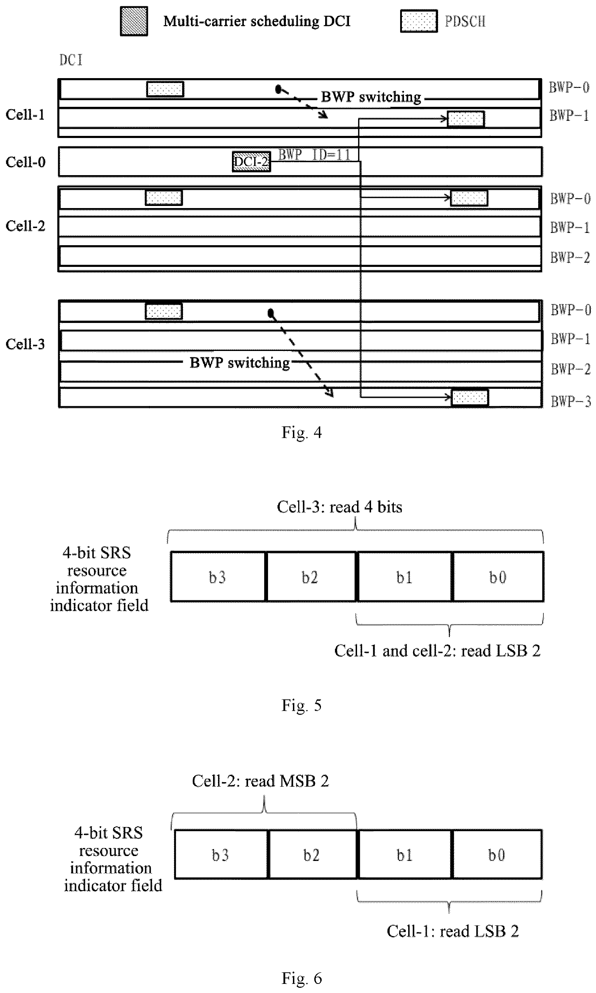

As illustrated in Fig. 4, before receiving DCI-2 scheduling signaling,

the terminal receives data on a BWP with a BWP-ID=0 in cell-1, wherein the active BWP has the BWP-ID=0;
the terminal receives data on a BWP with a BWP-ID=0 in cell-2, wherein the active BWP has the BWP-ID=0; and
the terminal receives data on a BWP with a BWP-ID=0 in cell-3, wherein the active BWP has the BWP-ID=0.

The terminal receives the DCI-2 scheduling signaling, which schedules cell-1, cell-2, and cell-3 (e.g., as indicated according to the indicator information of the scheduled cells), with the BWP ID=0b11 (note: 11 is binary here, which may also be decimal 3). The details are as follows.

For cell-1: since two BWPs are configured, 1 MSB (of course, it may also be 1 LSB) in the 2-bit BWP ID is read and converted into decimal 1, then cell-1 sets a BWP with a BWP ID=1 as a new active BWP (i.e., a switching from BWP ID=0 to BWP ID=1 is performed).

For cell-2: when the read value of the BWP ID is 3 (or binary 0b11), the information indicator field is ignored, and cell-2 keeps the previously active BWP unchanged, i.e., it is still considered that the data transmission of the base station is performed on the BWP with the BWP ID=0.

For cell-3: when the read value of the BWP ID is 3 (or binary 0b11), cell-3 adjusts the BWP ID of the active BWP to 3, i.e., performs a switching from BWP ID=0 to BWP ID=3.

Supplement 1: the operation of "indicator ignoring" in this embodiment may represent different behaviors of the terminal or the base station for different information indicator fields, but the UE may understand that the terminal does not perform any action (for the information indicator field). Examples are given below.

For a BWP ID indicator, "indicator ignoring" means that the active BWP remains unchanged.

For an SRS resource indicator that triggers an SRS dynamic transmission, "indicator ignoring" means that no SRS resource is selected, that is, the terminal does not send any SRS signal.

For an aperiodic CSI reporting (channel state reporting) indicator, "indicator ignoring" means that the reporting of any aperiodic CSI is not triggered.

Supplement 2: assuming that the number of bits in the information indicator field of Type 1A is M (supporting a maximum of $2^M$ entry combination types). For example, when a cell is configured with K entry combinations or K effective combinations (occupying $N = \lceil log_2 K \rceil$ bits), the method for reading a value indicated by the N bits in the information indicator field and judging whether the value indicated by the N bits exceeds a value range configured for the cell is one of the following methods.

M-bit information is read and converted into a decimal value, which is compared with K, and when the converted decimal value is greater than K, it is considered that the configured value range is exceeded (the value indicated by the M bits is not within the configured value range).

LSB N-bit information (indicated by a base station configuration) among the M-bit information is read and converted into a decimal value, which is compared with K, and when the converted decimal value is greater than K, it is considered that the configured value range is exceeded (the value indicated by the M bits is not within the configured value range).

MSB N-bit information (indicated by a base station configuration) among the M-bit information is read and converted into a decimal value, which is compared with K, and when the converted decimal value is greater than K, it is considered that the configured value range is exceeded (the value indicated by the M bits is not within the configured value range).

Any N-bit information (indicated by a base station configuration) among the M-bit information is read and converted into a decimal value, which is compared with K, and when the converted decimal value is greater than K, it is considered that the configured value range is exceeded (the value indicated by the M bits is not within the configured value range).

Embodiment 2

Taking the antenna port indicator as an example, this embodiment illustrates a processing method for a case where a value indicated by N bits in an information indicator field of Type 1A is not within a value range of an antenna port configured for a certain carrier (or cell).

For example, a cell set for multi-cell scheduling includes: cell-1 and cell-2, for which the same parameters are configured.

For cell-1 and cell-2: there are 32 entry parameters in a table configured for the antenna port indicator, and a corresponding relationship between the table and the information indicator field can still refer to the above Table 4, which indicates the scheduling of up to 2 codewords (actually, 1 or 2 codewords can be scheduled). The information indicator field of the antenna port is of 5 bits, with a value range of 0 to 31.

For example, in the multi-cell scheduling signaling DCI, cell-1 indicates 1-codeword scheduling, and cell-2 indicates 2-codeword scheduling. Thus, in the antenna port indicator field, the effective indicator range for cell-1 is 0 to 30, and the effective indicator range for cell-2 is 0 to 3. In order for flexible scheduling by the base station, when the antenna port index (port_index_indicated) indicated by the information indicator field of the DCI is greater than a maximum value (Max_num) in the effective range of 0 to 3, i.e., Max_num=3, the following processing may be performed for cell-2.

Method 1: when port_index_indicated is greater than Max_num, the terminal determines that the antenna port index scheduled for cell-2 is Max_num, i.e.,

$$\text{Port\_index\_cell} = \min(\text{port\_index\_indicated}, \text{Max\_num}).$$

Method 2: when port_index_indicated is greater than Max_num, the terminal determines that the antenna port index scheduled for cell-2 is:

$$\text{Port\_index\_cell} = \text{Mod}\,(\text{port\_index\_indicated}, \text{Max\_num}+1)$$

where Mod () means a remainder operation or a modulo operation. For example, Mod (5, 3+1) =5%4=1, where Max_num+1=4.

Supplement 1: assuming that the number of bits in the information indicator field of Type 1A is M (supporting a maximum of $2^M$ entry combination types). For example: when a cell is configured with K entry combinations or K effective combinations (the "effective" refers to that the number of entry combinations remaining after the "reserved entry combination types" are removed, and the occupied number of bits is $N = \lceil log_2 K \rceil$) , the method for reading a value indicated by the N bits in the information indicator field and judging whether the value indicated by the N bits exceeds a value range configured for the cell is one of the following methods.

All M bits of information are read and converted into a decimal value, the converted decimal value is compared with K, and when the converted decimal value is greater than K, it is considered that the configured value range is exceeded (the value indicated by the M bits is not within the configured value range).

N LSBs of information (indicated by a base station configuration or dynamic signaling) among the M-bit information are read and converted into a decimal value, which is compared with K, and when the converted decimal value is greater than K, it is considered that the configured value range is exceeded (the value indicated by the M bits is not within the configured value range).

N MSBs of information (indicated by a base station configuration or dynamic signaling) among the M-bit information is read and converted into a decimal value, which is compared with K, and when the converted decimal value is greater than K, it is considered that the configured value range is exceeded (the value indicated by the M bits is not within the configured value range).

Any N-bit information (indicated by a base station configuration or dynamic signaling) among the M-bit information is read and converted into a decimal value, which is compared with K, and when the converted decimal value is greater than K, it is considered that the configured value range is exceeded (the value indicated by the M bits is not within the configured value range).

Embodiment 3

Taking the BWP ID indicator as an example, this embodiment illustrates a processing method for taking a default value in a case where a value indicated by N bits in an information indicator field of Type 1A is not within a value range of a BWP ID configured for a certain carrier (or cell).

For example, a cell set for multi-cell scheduling includes: cell-1, cell-2 and cell-3, wherein

cell-1 is configured with two BWPs, i.e., BWP ID=0 and BWP ID=1;
cell-2 is configured with three BWPs, i.e., BWP ID=0, BWP ID=1 and BWP ID=2; and
cell-3 is configured with three BWPs, i.e., BWP ID=0, BWP ID=1, and BWP ID=2.

According to the above configurations, the methods for the three configured cells in Embodiment 3 of the present disclosure to read the BWP IDs are shown in Table 3-1 below.

Table 3-1

| BWP ID (information indicator field of Type 1A) | Cell-1 (read1 MSB) | Interpretation of cell-2 (read all 2 bits) | Interpretation of cell-3 (read all 2 bits) |
|---|---|---|---|
| 00 (decimal 0) | BWP ID=0 | BWP ID=0 | BWP ID=0 |
| 01 (decimal 1) | BWP ID=0 | BWP ID=1 | BWP ID=1 |
| 10 (decimal 2) | BWP ID=1 | BWP ID=2 | BWP ID=2 |
| 11 (decimal 3) | BWP ID=1 | BWP ID=1 (RRC configuration) | Default BWP (defined by a protocol) |

For cell-1: since two BWPs are configured, one of the two BWPs may be indicated using 1 bit, and 1 MSB of the information indicator field may be read (of course, 1 LSB may also be read), which is not limited here (note: the method for determining the number of bits is $\left\lceil \log_2(n_{\mathrm{BWP}}) \right\rceil$, where $n_{\mathrm{BWP,RRC}}$=2).

For cell-2: since three BWPs are configured, one of the three BWPs may be indicated using 2 bits, i.e., all 2 bits of the information indicator field are read. But when the information indicator field is 0b11, it is necessary to determine the BWP ID corresponding to 0b11 according to the RRC configuration information (e.g., BWP ID=1 corresponding to 0b11 in Table 3-1).

For cell-3: since three BWPs are configured, one of four BWPs may be indicated using 2 bits, i.e., all 2 bits of the information indicator field are read. But when the information indicator field is 0b11, it is necessary to determine the BWP ID corresponding to 0b11 according to the RRC configuration information (e.g., the default BWP ID in Table 3-1; here, the default BWP may be indicated by an RRC or other higher layer signaling, and may be any one of the configured BWPs).

Additional description 1: for the information indicator field of the BWP ID, the default BWP may be specified by protocol, such as a first active BWP, etc.

Additional description 2: when there are a plurality of reserved states (values not expected to be indicated in single-carrier scheduling) in the information indicator field of a carrier, a plurality of default values may be indicated by higher layer signaling (e.g., RRC) or defined by a protocol, and each default value corresponds to one of the reserved states.

Additional description 3: the method for judging whether a value indicated by N bits in an information indicator field is within a value range of a BWP ID configured for a certain carrier (or cell) is the same as that in Embodiment 1 or Embodiment 2, and will not be repeated here.

Embodiment 4

When a total number of bits (bitwidth_scheduled) occupied by each of the actually scheduled cells is less than or equal to a length (bitwidth_configured) of the information indicator field of Type 1A, the indication method of Type 2 is adopted. For example, when the configured length of the information indicator field of Type 1A is 4 bits, cell-1 and cell-2 are actually scheduled, wherein cell-1 occupies 2 bits and cell-2 occupies 2 bits, i.e., a total number of bits (4 bits) occupied by the actually scheduled cell-1 and cell-2 is equal to the configured length (4 bits) of the information indicator field of Type 1A.

The actual scheduling here may be classified into two cases.

Case 1: the number of actually scheduled cells is less than a configured maximum number of schedulable cells, so that the information bits required for the scheduling are reduced.

Case 2: the parameters of the scheduled cells are different, which narrows the actual effective indicator range, so that the information bits required for the scheduling are reduced.

Examples for the above two cases are given below respectively.

Case 1: taking the SRS resource indicator as an example, the number of actually scheduled cells is less than a configured maximum number of schedulable cells, so that the information bits required for the scheduling are reduced.

For example, a cell set for multi-cell scheduling includes: cell-1, cell-2 and cell-3, and the SRS resource indicator field is of 4 bits, wherein

for cell-1 and cell-2: there are 4 entry parameters in a table configured for the SRS resource indicator, and a corresponding relationship between the table and the information indicator field is shown in Table 4-1 below;
for cell-3: there are 16 entry parameters in a table configured for the SRS resource indicator, and a corresponding relationship between the table and the information indicator field is shown in Table 4-2 below.

Table 4-1

| Index | SRI(s), $N_{SRS}$ = 2 |
|---|---|
| 0 | 0 |
| 1 | 1 |
| 2 | 0,1 |
| 3 | Reserved |

Table 4-2

| Index | SRI(s), $N_{SRS}$ = 4 |
|---|---|
| 0 | 0 |
| 1 | 1 |
| 2 | 2 |
| 3 | 3 |
| 4 | 0,1 |
| 5 | 0,2 |
| 6 | 0,3 |
| 7 | 1,2 |
| 8 | 1,3 |
| 9 | 2,3 |
| 10 | 0,1,2 |
| 11 | 0,1,3 |
| 12 | 0,2,3 |
| 13 | 1,2,3 |
| 14-15 | Reserved |

When the scheduling signaling schedules three cells, the SRS resource indicator field sent by the base station is of 4 bits, wherein for cell-1 and cell-2, 2 LSBs of information are read to determine SRS resource indicator information for cell-1 and cell-2; and for cell-3, all 4 bits of information are read to determine SRS resource indicator information for cell 3, as shown in Fig. 5.

Alternatively, when the scheduling signaling schedules only two cells, the SRS resource indicator field sent by the base station is of 4 bits, wherein for cell-1 and cell-2, 2-bit information is read (e.g., for cell-1, 2 LSBs are read, and for cell-2, 2 MSBs are read) to determine SRS resource indicator information, as illustrated in Fig. 6.

Additional description 1: in order for flexible scheduling by the base station, when the base station schedules all the configured cells, for some cells, MSBs may be read, for some cells, LSBs may be read, or for some cells, the middle bits may be read. Still taking the SRS resource indicator as an example, when cell-1, cell-2 and cell-3 are scheduled, for cell-3, all 4 bits of information are read, for cell-1, 2 LSBs of information are read, and for cell-2, 2 MSBs of information are read.

Case 2: taking the antenna port indicator as an example, the parameters of the scheduled cells are different, which narrows the actual effective indicator range, so that the information bits required for the scheduling are reduced.

For example, a cell set for multi-cell scheduling includes: cell-1, cell-2 and cell-3, wherein the configuration parameters of the three cells are the same.

For cell-1, cell-2 and cell-3: there are 32 entry parameters in a table configured for the antenna port indicator, and a corresponding relationship between the table and the information indicator field can still refer to the above Table 4, which indicates the scheduling of up to 2 codewords (actually, 1 or 2 codewords can be scheduled). The information indicator field of the antenna port is of 5 bits. When the schedule signaling indicates 1-codeword scheduling, the effective indicator range is 0 to 30, and when the scheduling signaling indicates 2-codeword scheduling, the effective indicator range is 0 to 3.

When the scheduling signaling schedules two cells (cell-1 and cell-2), such as scheduling two transport blocks (i.e., 2 codewords) for either cell, the antenna port indicator field sent by the base station is still of 5 bits. In this case, if different indicator bits are read for different scheduled cells, the base station can more flexibly indicate antenna port information of different cells. Examples are given below.

For Cell-1, 2 LSBs of information are read to determine the antenna port information for cell 1.

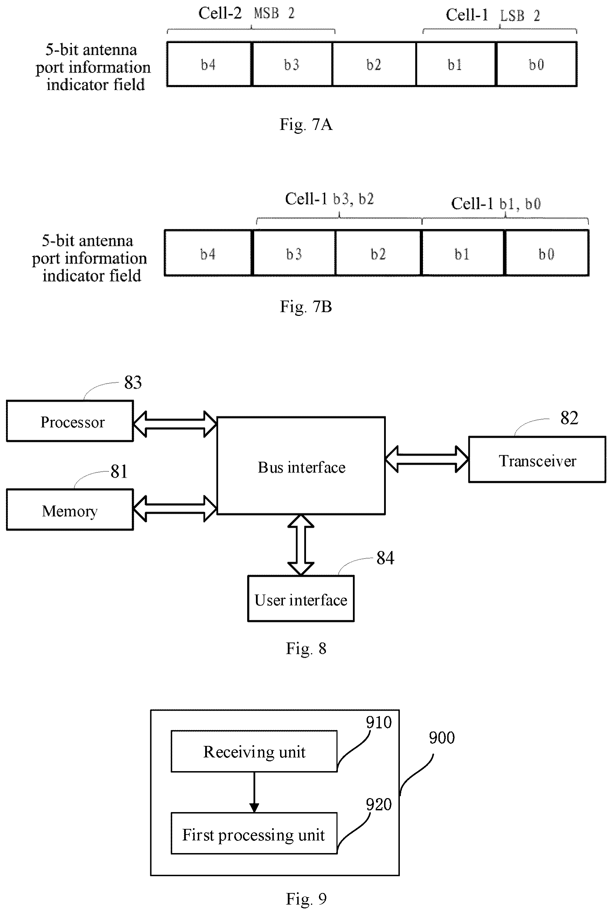

For Cell-2, 2 MSBs of information are read to determine the antenna port information for cell-2. The reading method is illustrated in Fig. 7A, that is, for different cells, the information indicator field is read from two ends respectively. Of course, cell-1 and cell-2 may also adopt the following reading method as illustrated in Fig. 7B, that is, the information indicator field is read sequentially for different cells, etc., which is not limited in the embodiments of the present disclosure.

Additional description 1: in order for flexible scheduling by the base station, when the base station schedules all the configured cells, for some cells, MSBs may be read, for some cells, LSBs may be read, or for some cells, the middle bits may be read. Still taking the antenna port indicator as an example, when cell-1, cell-2 and cell-3 are scheduled, for cell-3, all 5 bits of information are read (1 codeword is scheduled), for cell-1, 2 LSBs of information are read (2 codewords are scheduled), and for cell-2, 2 MSBs of information are read (2 codewords are scheduled).

Additional descriptions of the technical solutions are given below.

Description 1: judgement of BWP switching

In multi-cell scheduling signaling, for example, the cells scheduled by the DCI are indicated by an information indicator field co-scheduled-cells-indicator. Generally, the terminal only reads the information indicator field of the scheduled cell, and corresponding information indicator field of an unscheduled cell is ineffective. Considering the switching action of the BWP restricts the scheduling, one of the following methods may be adopted in order to avoid multiple BWP switching.

Method 1: for an unscheduled carrier, it is also possible to judge whether to perform a BWP switching according to a BWP ID indicator.

Method 2: when a BWP ID indicates a certain value, all carriers ignore the BWP ID indicator.

Description 2: for the information indicator field of Type 1A, the behavior of the base station may also be specified, that is, the terminal does not expect to receive any information indicator field which exceeds the expected range.

The information processing method of the present disclosure has been introduced in the above embodiments. The corresponding apparatus, terminal, and network device will be further described below in conjunction with the drawings.

Specifically, as illustrated in Fig. 8, an embodiment of the present disclosure further provides an information processing apparatus, including a memory 81, a transceiver 82 and a processor 83, wherein the memory 81 is configured to store a computer program; the transceiver 82 is configured to transmit and receive data under the control of the processor 83; and the processor 83 is configured to read the computer program in the memory 81 and perform the following steps:

receiving downlink control information (DCI) sent by a network device, wherein the DCI includes at least one information indicator field, the information indicator field corresponding to a first parameter of each of at least two cells scheduled by the DCI; and determining a value corresponding to the first parameter of a first scheduled cell according to a value indicated by N bits in the information indicator field, wherein the first scheduled cell is one of the at least two cells scheduled by the DCI;

N≤M, where N and M are positive integers, and M denotes the number of bits included in the information indicator field.

Optionally, the processor 83 is configured to read the computer program in the memory 81 and perform the following steps:

in a case where the value indicated by the N bits does not fall within a value range of the first parameter corresponding to the first scheduled cell, ignoring the information indicator field; or, determining a target value according to the value indicated by the N bits, and determining the target value as the value corresponding to the first parameter of the first scheduled cell;

or,

in a case where the value indicated by the N bits falls within the value range of the first parameter corresponding to the first scheduled cell, determining the value indicated by the N bits as the value corresponding to the first parameter of the first scheduled cell.

Optionally, the processor 83 is configured to read the computer program in the memory 81 and perform the following steps:

determining the target value according to the value indicated by the N bits and a maximum value of the value range of the first parameter;

or,

determining a preset value corresponding to the value indicated by the N bits, and determining the preset value as the target value, wherein the preset value is configured by higher layer signaling sent by the network device, or the preset value is defined by a protocol.

Optionally, the processor 83 is configured to read the computer program in the memory 81 and perform the following steps:

determining the smaller of the value indicated by the N bits and the maximum value of the value range of the first parameter as the target value;

or,

determining the target value through performing modulo operation on the value indicated by the N bits and the maximum value of the value range of the first parameter.

Optionally, the N is determined by the number of first parameters configured for the first scheduled cell.

Optionally, the N bits are N most significant bits (MSBs) among M bits configured for the information indicator field;

or,

the N bits are N least significant bits (LSBs) among the M bits;

or,

the N bits are any N bits among the M bits.

Optionally, the processor 83 is configured to read the computer program in the memory 81 and perform the following steps:

in a case where a sum of the numbers of bits occupied by the at least two cells respectively is less than or equal to a total number of bits included in the information indicator field, determining N bits in the information indicator field that correspond to the first scheduled cell;

wherein the at least two cells occupy different respective bits in the information indicator field.

Optionally, the first parameter includes at least one of:

a bandwidth part (BWP);

an antenna port; or

a sounding reference signal (SRS) resource.

Optionally, the processor 83 is configured to read the computer program in the memory 81 and perform the following step:

in a case where the first parameter includes a BWP, not performing a BWP switching, or maintaining a currently active BWP.

Optionally, the processor 83 is configured to read the computer program in the memory 81 and perform the following step:

in a case where the first parameter includes an SRS resource, not selecting any SRS resource.

Optionally, the processor 83 is configured to read the computer program in the memory 81 and perform the following step:

in a case where the first parameter includes an aperiodic channel state information (CSI), not triggering reporting of the aperiodic CSI.

In which, in Fig. 8, a bus architecture may include any number of interconnected buses and bridges, and specifically various circuits of one or more processors represented by the processor 83 and the memory represented by the memory 81 are linked together. The bus architecture may also link together various other circuits, such as a peripheral device, a voltage stabilizer, a power management circuit, etc., which are well known in the art and not further described herein. The bus interface provides an interface. The transceiver 82 may be composed of a plurality of elements, i.e., including a transmitter and a receiver, so as to provide units for communication with various other devices over a transmission medium including a wireless channel, a wired channel, a fiber optic cable, or the like. For different user equipment, a user interface 84 may also be an interface capable of externally or internally connecting a desired device including, but not limited to, a keypad, a display, a speaker, a microphone, a joystick, or the like.

The processor 83 is responsible for managing a bus architecture and general processing, and the memory 81 may store data used by the processor 83 in performing operations.

Optionally, the processor 83 may be a central processing unit (CPU), an application specific integrated circuit (ASIC), a field-programmable gate array (FPGA), or a complex programmable logic device (CPLD). The processor may also adopt a multi-core architecture.

The processor calls the computer program stored in the memory, and performs any one of the methods in the embodiments of the present disclosure according to an obtained executable instruction. The processor and the memory may also be physically separated.

It should be noted that the above apparatus according to the embodiment of the present disclosure can implement all methodical steps implemented by the information processing method at the terminal side, and achieve the same technical effects, so the parts and the advantageous effects of this embodiment the same as those of the method embodiments will not be described in detail.

As illustrated in Fig. 9, an embodiment of the present disclosure further provides a terminal 900, including:

a receiving unit 910 configured to receive downlink control information (DCI) sent by a network device, wherein the DCI includes at least one information indicator field, the information indicator field corresponding to a first parameter of each of at least two cells scheduled by the DCI; and

a first processing unit 920 configured to determine a value corresponding to the first parameter of a first scheduled cell according to a value indicated by N bits in the information indicator field, wherein the first scheduled cell is one of the at least two cells scheduled by the DCI; $N \leq M$, where N and M are positive integers, and M denotes the number of bits included in the information indicator field.

Optionally, the first processing unit 920 is further configured to:

in a case where the value indicated by the N bits does not fall within a value range of the first parameter corresponding to the first scheduled cell, ignore the information indicator field; or, determine a target value according to the value indicated by the N bits, and determine the target value as the value corresponding to the first parameter of the first scheduled cell;

or,

in a case where the value indicated by the N bits falls within the value range of the first parameter corresponding to the first scheduled cell, determine the value indicated by the N bits as the value corresponding to the first parameter of the first scheduled cell.

Optionally, the first processing unit 920 is further configured to:

determine the target value according to the value indicated by the N bits and a maximum value of the value range of the first parameter;

or,

determine a preset value corresponding to the value indicated by the N bits, and determine the preset value as the target value, wherein the preset value is configured by higher layer signaling sent by the network device, or the preset value is defined by a protocol.

Optionally, the first processing unit 920 is further configured to:

determine the smaller of the value indicated by the N bits and the maximum value of the value range of the first parameter as the target value;
or,
determine the target value through performing modulo operation on the value indicated by the N bits and the maximum value of the value range of the first parameter.

Optionally, the N is determined by the number of first parameters configured for the first scheduled cell.
Optionally, the N bits are N most significant bits (MSBs) among M bits configured for the information indicator field;
or,

the N bits are N least significant bits (LSBs) among the M bits;
or,
the N bits are any N bits among the M bits.

Optionally, the terminal 900 further includes:

a second processing unit configured to, in a case where a sum of the numbers of bits occupied by the at least two cells respectively is less than or equal to a total number of bits included in the information indicator field, determine N bits in the information indicator field that correspond to the first scheduled cell;
wherein the at least two cells occupy different respective bits in the information indicator field.

Optionally, the first parameter includes at least one of:

a bandwidth part (BWP);
an antenna port; or
a sounding reference signal (SRS) resource.

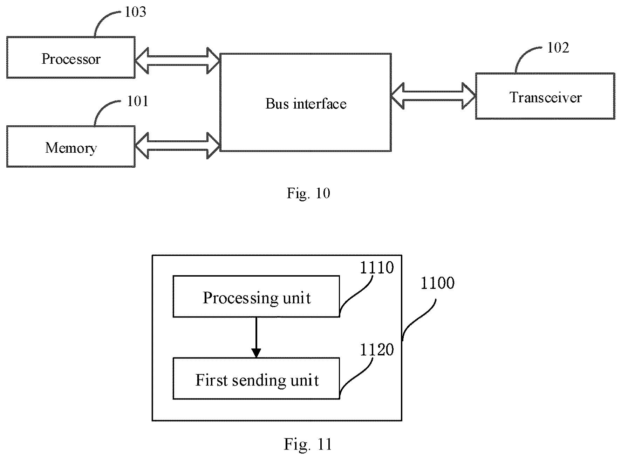

Optionally, the first processing unit 920 is further configured to:
in a case where the first parameter includes a BWP, not perform a BWP switching, or maintain a currently active BWP.
Optionally, the first processing unit 920 is further configured to:
in a case where the first parameter includes an SRS resource, not select any SRS resource.
Optionally, the first processing unit 920 is further configured to:
in a case where the first parameter includes an aperiodic channel state information (CSI), not triggering reporting of the aperiodic CSI.
It should be noted that the above terminal according to the embodiment of the present disclosure can implement all methodical steps implemented by the information processing method at the terminal side, and achieve the same technical effects, so the parts and the advantageous effects of this embodiment the same as those of the method embodiments will not be described in detail.
As illustrated in Fig. 10, an embodiment of the present disclosure further provides an information processing apparatus, including a memory 101, a transceiver 102 and a processor 103, wherein the memory 101 is configured to store a computer program; the transceiver 102 is configured to transmit and receive data under the control of the processor 103; and the processor 103 is configured to read the computer program in the memory 101 and perform the following steps:

determining at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; N≤M, where N and M are positive integers, and M denotes the number of bits included in the information indicator field; and
sending the DCI to a terminal, wherein the DCI includes the at least one information indicator field.

Optionally, the processor 103 is configured to read the computer program in the memory 101 and perform the following step:

sending higher layer signaling to the terminal, the higher layer signaling carrying indicator information which indicates a preset value;

wherein in a case where the value indicated by the N bits does not fall within a value range of the first parameter corresponding to the first scheduled cell, and the preset value indicates the value corresponding to the first parameter of the first scheduled cell.

Optionally, the N is determined by the number of first parameters configured for the first scheduled cell.

Optionally, the N bits are N most significant bits (MSBs) among M bits configured for the information indicator field;

or,

the N bits are N least significant bits (LSBs) among the M bits;

or,

the N bits are any N bits among the M bits.

Optionally, in a case where a sum of the numbers of bits occupied by the at least two cells respectively is less than or equal to a total number of bits included in the information indicator field, the at least two cells occupy different respective bits in the information indicator field.

Optionally, the first parameter includes at least one of:

a bandwidth part (BWP) serial number;

an antenna port number; or

a sounding reference signal (SRS) resource serial number indicator.

In which, in Fig. 10, a bus architecture may include any number of interconnected buses and bridges, and specifically various circuits of one or more processors represented by the processor 103 and the memory represented by the memory 101 are linked together. The bus architecture may also link together various other circuits, such as a peripheral device, a voltage stabilizer, a power management circuit, etc., which are well known in the art and not further described herein. The bus interface provides an interface. The transceiver 102 may be composed of a plurality of elements, i.e., including a transmitter and a receiver, so as to provide units for communication with various other devices over a transmission medium including a wireless channel, a wired channel, a fiber optic cable, or the like. The processor 103 is responsible for managing a bus architecture and general processing, and the memory 101 may store data used by the processor 103 in performing operations.

The processor 103 may be a central processing unit (CPU), an application specific integrated circuit (ASIC), a field-programmable gate array (FPGA), or a complex programmable logic device (CPLD). The processor may also adopt a multi-core architecture.

It should be noted that the above apparatus according to the embodiment of the present disclosure can implement all methodical steps implemented by the information processing method at the network device side, and achieve the same technical effects, so the parts and the advantageous effects of this embodiment the same as those of the method embodiments will not be described in detail.

As illustrated in Fig. 11, an embodiment of the present disclosure further provides a network device 1100, including:

a processing unit 1110 configured to determine at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; N≤M, where N and M are positive integers, and M denotes the number of bits included in the information indicator field; and

a first sending unit 1120 configured to send the DCI to a terminal, wherein the DCI includes the at least one information indicator field.

Optionally, the network device 1100 further includes:

a second sending unit configured to send higher layer signaling to the terminal, the higher layer signaling carrying indicator information which indicates a preset value;

wherein in a case where the value indicated by the N bits does not fall within a value range of the first parameter corresponding to the first scheduled cell, and the preset value indicates the value corresponding to the first parameter of the first scheduled cell.

Optionally, the N is determined by the number of first parameters configured for the first scheduled cell.

Optionally, the N bits are N most significant bits (MSBs) among M bits configured for the information indicator field;

or,

the N bits are N least significant bits (LSBs) among the M bits;

or,

the N bits are any N bits among the M bits.

Optionally, in a case where a sum of the numbers of bits occupied by the at least two cells respectively is less than or equal to a total number of bits included in the information indicator field, the at least two cells occupy different respective bits in the information indicator field.

Optionally, the first parameter includes at least one of:

a bandwidth part (BWP) serial number;

an antenna port number; or

a sounding reference signal (SRS) resource serial number indicator.

It should be noted that the above network device according to the embodiment of the present disclosure can implement all methodical steps implemented the information processing method at the network device side, and achieve the same technical effects, so the parts and the advantageous effects of this embodiment the same as those of the method embodiments will not be described in detail.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, when implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a read-only memory (ROM), a random access memory (RAM), a magnetic disk, or an optical disk.

An embodiment of the present disclosure further provides a processor-readable storage medium storing a computer program, wherein the computer program is configured to cause a processor to perform the steps of the information processing method at the terminal side or at the network device side, and achieve same technical effects, so the parts and the advantageous effects of this embodiment the same as those of the method embodiments will not be described in detail.

The processor-readable storage medium may be any available medium or data storage device accessible to the processor, including but not limited to, a magnetic storage (e.g., a floppy disk, a hard disk, a magnetic tape, magneto-optical (MO) disk, etc.), an optical storage (e.g., a compact disc (CD), a digital video disc (DVD), a blu-ray disc (BD), a high-definition versatile disc (HVD), etc.), and a semiconductor memory (e.g., a read-only memory (ROM), an erasable programmable ROM (EPROM), an electrically EPROM (EEPROM), an NAND FLASH, a solid state disk or solid state drive (SSD)), etc.

Those skilled in the art will appreciate that an embodiment of the present disclosure may be provided as a method, a system, or a computer program product. Accordingly, the present disclosure may take the form of entirely hardware embodiments, entirely software embodiments, or embodiments combining software and hardware aspects. Moreover, the present disclosure may take the form of a computer program product embodied on one or more computer-usable storage media (including but not limited to a disk storage, an optical storage, etc.) containing computer-usable program codes.

The present disclosure is described with reference to the flowcharts and/or the block diagrams of the method, the apparatus (system), and the computer program product according to the embodiments of the present disclosure. It should be understood that each flow and/or block in a flowchart and/or a block diagram, and combinations of the flows and/or the blocks in the flowchart and/or the block diagram may be implemented by computer-executable instructions. These computer-executable instructions may be provided to a processor of a general-purpose computer, a special-purpose computer, an embedded processing machine or other programmable data processing device to produce a machine, such that the instructions executed by the processor of the computer or other programmable data processing device create means to realize function(s) specified in one or more flows of the flowchart and/or one or more blocks in the block diagram.

These processor-executable instructions may also be stored in a processor-readable memory capable of guiding the computer or other programmable data processing device to work in a particular way, such that the instructions stored in the processor-readable memory can produce manufacture articles including an instructing device which realizes function(s) specified in one or more flows in the flowchart and/or one or more blocks in the block diagram.

These processor-executable instructions may also be loaded onto a computer or other programmable data processing device, such that a series of operation steps can be performed on the computer or other programmable data processing device to produce a processing realized by the computer, thus the instructions executed on the computer or other programmable device provide step(s) for realizing function(s) specified in one or more flows in the flowchart and/or one or more blocks in the block diagram.

In addition, it should be noted that in the apparatus and the method of the present disclosure, it is apparent that each component or each step can be decomposed and/or recombined. Such decomposition and/or recombination should be regarded as equivalent solutions of the present disclosure. Moreover, the steps for performing the above series of processes can naturally be performed in an order as described in time sequence, but are not necessarily required to be performed in time sequence, and some steps may be performed in parallel or independently of each other. For those of ordinary skill in the art, it is understandable that all or any steps or components of the method and the apparatus of the present disclosure can be implemented in any computing device (including a processor, a storage medium, etc.) or a network of the computing device, with hardware, firmware, software, or combinations thereof, which can be achieved by those of ordinary skill in the art using basic programming skills thereof after reading the description of the present disclosure.

It should be noted that the division of the modules is only a division of logical functions, and in practical implementations, the modules may be entirely or partially integrated into a physical entity, or physically separated. In addition, these modules may all be implemented by calling software with a processing element; or all be implemented in the form of hardware; or some implemented by calling software with a processing element, and some implemented in the form of hardware. For example, a determination module may be a separately disposed processing element, or may be implemented by being integrated in a chip of the apparatus. In addition, the module may also be stored in the form of program codes in a memory of the apparatus, and a processing element of the apparatus calls and executes the function of the determination module. The implementations of other modules are similar. In addition, all or part of these modules may be integrated together or independently implemented. The processing element here may be an integrated circuit with a signal processing capability. During implementations, the steps of the above method or the above modules may be completed by a hardware integrated logical circuit in the processor element or instructions in the form of software.

For example, various modules, units, sub-units, or sub-modules may be one or more integrated circuits configured to implement the above methods, such as one or more application specific integrated circuits (ASICs), or one or more microprocessors (digital signal processors, DSPs), or one or more field programmable gate arrays (FPGAs), etc. For another example, when one of the above modules is implemented by calling program codes with a processing element, the processing element may be a general-purpose processor, such as a central processing unit (CPU) or any other processor capable of calling the program codes. For still another example, these modules may be integrated and implemented in the form of a system-on-a-chip (SOC).

The terms such as "first" and "second" in the Specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "comprise", "have" and any variations thereof, are intended to cover non-exclusive inclusions, e.g., a process, a method, a system, a product, or a device that includes a series of steps or elements is not necessarily limited to the explicitly listed steps or units, but may include other steps or units not expressly listed or inherent to such process, method, product, or device. In addition, the term "and/or" used in the Specification and the claims means at least one of the connected objects. For example, A and/or B and/or C means that there are seven cases, i.e., A exists alone, B exists alone, C exists alone, both A and B exist, both B and C exist, both A and C exist, and A, B and C all exist. Similarly, "at least one of A or B" in the Specification and the claims should be understood as "A exists alone, B exists alone, or both A and B exist".

Obviously, those skilled in the art can make various modifications and variations to the present disclosure without departing from the spirit and the scope of the present disclosure. Thus, when these modifications and variations of the present disclosure fall within the scope of the claims of the present disclosure and the technical equivalents thereof, the present disclosure is also intended to include these modifications and variations.

**Claims**

1.    An information processing method, comprising:

receiving, by a terminal, downlink control information (DCI) sent by a network device, wherein the DCI comprises at least one information indicator field, the information indicator field corresponding to a first parameter of each of at least two cells scheduled by the DCI; and

determining, by the terminal, a value corresponding to the first parameter of a first scheduled cell according to a value indicated by N bits in the information indicator field, wherein the first scheduled cell is one of the at least two cells scheduled by the DCI; $N \leq M$, where N and M are positive integers, and M denotes the number of bits included in the information indicator field.

2. The information processing method according to claim 1, wherein the determining, by the terminal, the value corresponding to the first parameter of the first scheduled cell according to the value indicated by N bits in the information indicator field comprises:

in a case where the value indicated by the N bits does not fall within a value range of the first parameter corresponding to the first scheduled cell, ignoring, by the terminal, the information indicator field; or, determining, by the terminal, a target value according to the value indicated by the N bits, and determining the target value as the value corresponding to the first parameter of the first scheduled cell;

or,

in a case where the value indicated by the N bits falls within the value range of the first parameter corresponding to the first scheduled cell, determining, by the terminal, the value indicated by the N bits as the value corresponding to the first parameter of the first scheduled cell.

3. The information processing method according to claim 2, wherein the determining, by the terminal, the target value according to the value indicated by the N bits comprises:

determining, by the terminal, the target value according to the value indicated by the N bits and a maximum value of the value range of the first parameter;

or,

determining, by the terminal, a preset value, and determining, by the terminal, the preset value as the target value, wherein the preset value is configured by higher layer signaling sent by the network device, or the preset value is defined by a protocol.

4. The information processing method according to claim 3, wherein the determining, by the terminal, the target value according to the value indicated by the N bits and the maximum value of the value range of the first parameter comprises:

determining, by the terminal, the smaller of the value indicated by the N bits and the maximum value of the value range of the first parameter as the target value;

or,

determining, by the terminal, the target value through performing modulo operation on the value indicated by the N bits and the maximum value of the value range of the first parameter.

5. The information processing method according to claim 1, wherein the N is determined by the number of first parameters configured for the first scheduled cell.

6. The information processing method according to claim 1 or 5, wherein the N bits are N most significant bits (MSBs) among M bits configured for the information indicator field;

or,

the N bits are N least significant bits (LSBs) among the M bits;

or,

the N bits are any N bits among the M bits.

7. The information processing method according to claim 1, wherein before the determining, by the terminal, the value corresponding to the first parameter of the first scheduled cell according to the value indicated by N bits in the information indicator field, the method further comprises:

in a case where a sum of the numbers of bits occupied by the at least two cells respectively is less than or equal to a total number of bits included in the information indicator field, determining N bits in the information indicator field that correspond to the first scheduled cell;
wherein the at least two cells occupy different respective bits in the information indicator field.

8. The information processing method according to claim 1 or 2, wherein the first parameter comprises at least one of:

    a bandwidth part (BWP);
    an antenna port; or
    a sounding reference signal (SRS) resource.

9. The information processing method according to claim 2, wherein in a case where the first parameter comprises the BWP, the ignoring, by the terminal, the information indicator field comprises:
not performing, by the terminal, a BWP switching, or maintaining, by the terminal, a currently active BWP.

10. The information processing method according to claim 2, wherein in a case where the first parameter comprises the SRS resource, the ignoring, by the terminal, the information indicator field comprises:
not selecting, by the terminal, any SRS resource.

11. The information processing method according to claim 2, wherein in a case where the first parameter comprises an aperiodic channel state information (CSI), the ignoring, by the terminal, the information indicator field comprises:
not triggering, by the terminal, reporting of the aperiodic CSI.

12. An information processing method, comprising:

    determining, by a network device, at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; N≤M, where N and M are positive integers, and M denotes the number of bits included in the information indicator field; and
    sending, by the network device, the DCI to a terminal, wherein the DCI comprises the at least one information indicator field.

13. The information processing method according to claim 12, wherein in a case where a sum of the numbers of bits occupied by the at least two cells respectively is less than or equal to a total number of bits included in the information indicator field, the at least two cells occupy different respective bits in the information indicator field.

14. An information processing apparatus, comprising a memory, a transceiver and a processor;
wherein the memory is configured to store a computer program; the transceiver is configured to transmit and receive data under the control of the processor; and the processor is configured to read the computer program in the memory and perform the following steps:

    receiving downlink control information (DCI) sent by a network device, wherein the DCI comprises at least one information indicator field, the information indicator field corresponding to a first parameter of each of at least two cells scheduled by the DCI; and
    determining a value corresponding to the first parameter of a first scheduled cell according to a value indicated by N bits in the information indicator field, wherein the first scheduled cell is one of the at least two cells scheduled by the DCI; N≤M, where N and M are positive integers, and M denotes the number of bits included in the information indicator field.

15. The information processing apparatus according to claim 14, wherein the processor is configured to read the computer program in the memory and perform the following steps:

    in a case where the value indicated by the N bits does not fall within a value range of the first parameter corresponding to the first scheduled cell, ignoring the information indicator field; or, determining a target value according to the value indicated by the N bits, and determining the target value as the value corresponding to the first parameter of the first scheduled cell;
    or,
    in a case where the value indicated by the N bits falls within the value range of the first parameter corresponding to the first scheduled cell, determining the value indicated by the N bits as the value corresponding to the first parameter of the first scheduled cell.

16. The information processing apparatus according to claim 15, wherein the processor is configured to read the computer program in the memory and perform the following steps:

determining the target value according to the value indicated by the N bits and a maximum value of the value range of the first parameter;
or,
determining a preset value, and determining the preset value as the target value, wherein the preset value is configured by higher layer signaling sent by the network device, or the preset value is defined by a protocol.

17. The information processing apparatus according to claim 16, wherein the processor is configured to read the computer program in the memory and perform the following steps:

determining the smaller of the value indicated by the N bits and the maximum value of the value range of the first parameter as the target value;
or,
determining the target value through performing modulo operation on the value indicated by the N bits and the maximum value of the value range of the first parameter.

18. The information processing apparatus according to claim 14, wherein the N is determined by the number of first parameters configured for the first scheduled cell.

19. The information processing apparatus according to claim 14 or 17, wherein the N bits are N most significant bits (MSBs) among M bits configured for the information indicator field;
or,

the N bits are N least significant bits (LSBs) among the M bits;
or,
the N bits are any N bits among the M bits.

20. The information processing apparatus according to claim 17, wherein the processor is configured to read the computer program in the memory and perform the following step:

in a case where a sum of the numbers of bits occupied by the at least two cells respectively is less than or equal to a total number of bits included in the information indicator field, determining N bits in the information indicator field that correspond to the first scheduled cell;
wherein the at least two cells occupy different respective bits in the information indicator field.

21. The information processing apparatus according to claim 14 or 15, wherein the first parameter comprises at least one of:

a bandwidth part (BWP);
an antenna port; or
a sounding reference signal (SRS) resource.

22. The information processing apparatus according to claim 15, wherein the processor is configured to read the computer program in the memory and perform the following step:
in a case where the first parameter comprises the BWP, not performing a BWP switching, or maintaining a currently active BWP.

23. The information processing apparatus according to claim 15, wherein the processor is configured to read the computer program in the memory and perform the following step:
in a case where the first parameter comprises the SRS resource, not selecting any SRS resource.

24. The information processing apparatus according to claim 15, wherein the processor is configured to read the computer program in the memory and perform the following step:
in a case where the first parameter comprises an aperiodic channel state information (CSI), not triggering reporting of the aperiodic CSI.

25. A terminal, comprising:

a receiving unit, configured to receive downlink control information (DCI) sent by a network device, wherein the DCI comprises at least one information indicator field, the information indicator field corresponding to a first parameter of each of at least two cells scheduled by the DCI; and

a first processing unit, configured to determine a value corresponding to the first parameter of a first scheduled cell according to a value indicated by N bits in the information indicator field, wherein the first scheduled cell is one of the at least two cells scheduled by the DCI; N≤M, where N and M are positive integers, and M denotes the number of bits included in the information indicator field.

26. The terminal according to claim 25, wherein the first processing unit is further configured to:

in a case where the value indicated by the N bits does not fall within a value range of the first parameter corresponding to the first scheduled cell, ignore the information indicator field; or, determine a target value according to the value indicated by the N bits, and determine the target value as the value corresponding to the first parameter of the first scheduled cell;

or,

in a case where the value indicated by the N bits falls within the value range of the first parameter corresponding to the first scheduled cell, determine the value indicated by the N bits as the value corresponding to the first parameter of the first scheduled cell.

27. The terminal according to claim 26, wherein the first processing unit is further configured to:

determine the target value according to the value indicated by the N bits and a maximum value of the value range of the first parameter;

or,

determine a preset value corresponding to the value indicated by the N bits, and determine the preset value as the target value, wherein the preset value is configured by higher layer signaling sent by the network device, or the preset value is defined by a protocol.

28. The terminal according to claim 27, wherein the first processing unit is further configured to:

determine the smaller of the value indicated by the N bits and the maximum value of the value range of the first parameter as the target value;

or,

determine the target value through performing modulo operation on the value indicated by the N bits and the maximum value of the value range of the first parameter.

29. The terminal according to claim 25, wherein the N is determined by the number of first parameters configured for the first scheduled cell.

30. The terminal according to claim 25 or 29, wherein the N bits are N most significant bits (MSBs) among M bits configured for the information indicator field;

or,

the N bits are N least significant bits (LSBs) among the M bits;

or,

the N bits are any N bits among the M bits.

31. The terminal according to claim 25, wherein the terminal further comprises:

a second processing unit, configured to, in a case where a sum of the numbers of bits occupied by the at least two cells respectively is less than or equal to a total number of bits included in the information indicator field, determine N bits in the information indicator field that correspond to the first scheduled cell;

wherein the at least two cells occupy different respective bits in the information indicator field.

32. The terminal according to claim 25 or 26, wherein the first parameter comprises at least one of:

    a bandwidth part (BWP);
    an antenna port; or
    a sounding reference signal (SRS) resource.

33. The terminal according to claim 26, wherein the first processing unit is further configured to: in a case where the first parameter comprises the BWP, not perform a BWP switching, or maintain a currently active BWP.

34. The terminal according to claim 26, wherein the first processing unit is further configured to:
    in a case where the first parameter comprises the SRS resource, not select any SRS resource.

35. The terminal according to claim 26, wherein the first processing unit is further configured to:
    in a case where the first parameter comprises an aperiodic channel state information (CSI), not trigger reporting of the aperiodic CSI.

36. An information processing apparatus, comprising a memory, a transceiver and a processor;
    wherein the memory is configured to store a computer program; the transceiver is configured to transmit and receive data under the control of the processor; and the processor is configured to read the computer program in the memory and perform the following steps:

    determining at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; $N \leq M$, where N and M are positive integers, and M denotes the number of bits included in the information indicator field; and
    sending the DCI to a terminal, wherein the DCI comprises the at least one information indicator field.

37. The information processing apparatus according to claim 36, wherein in a case where a sum of the numbers of bits occupied by the at least two cells respectively is less than or equal to a total number of bits included in the information indicator field, the at least two cells occupy different respective bits in the information indicator field.

38. A network device, comprising:

    a processing unit, configured to determine at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; $N \leq M$, where N and M are positive integers, and M denotes the number of bits included in the information indicator field; and
    a first sending unit, configured to send the DCI to a terminal, wherein the DCI comprises the at least one information indicator field.

39. The network device according to claim 38, wherein in a case where a sum of the numbers of bits occupied by the at least two cells respectively is less than or equal to a total number of bits included in the information indicator field, the at least two cells occupy different respective bits in the information indicator field.

40. A processor-readable storage medium storing a computer program, wherein the computer program is configured to cause a processor to perform the steps of the information processing method according to any one of claims 1 to 11, or the computer program is configured to cause the processor to perform the steps of the information processing method according to claim 12 or 13.

EP 4 661 327 A1

Fig. 1A

Fig. 1B

Fig. 1C

A terminal receives DCI sent by a network device, wherein the DCI includes at least one information indicator field corresponding to a first parameter of each of at least two cells scheduled by the DCI

21

The terminal determines a value corresponding to the first parameter of a first scheduled cell according to a value indicated by N bits in the information indicator field, wherein the first scheduled cell is one of the at least two cells scheduled by the DCI; N≤M, where N and M are positive integers, and M denotes the number of bits included in the information indicator field

22

Fig. 2

A network device determines at least one information indicator field, wherein the information indicator field corresponds to a first parameter of each of at least two cells scheduled by a downlink control information (DCI), and N bits in the information indicator field indicate a value corresponding to the first parameter of a first scheduled cell, the first scheduled cell is one of the at least two cells; N≤M, where N and M are positive integers, and M denotes the number of bits included in the information indicator field

31

The network device sends the DCI to a terminal, wherein the DCI includes the at least one information indicator field for scheduling target parameters of the at least two cells

32

Fig. 3

◩ Multi-carrier scheduling DCI       ▢ PDSCH

DCI

Cell-1
- BWP switching
- BWP-0
- BWP-1

Cell-0
- DCI-2 BWP ID=11

Cell-2
- BWP-0
- BWP-1
- BWP-2

Cell-3
- BWP switching
- BWP-0
- BWP-1
- BWP-2
- BWP-3

Fig. 4

Cell-3: read 4 bits

4-bit SRS resource information indicator field

| b3 | b2 | b1 | b0 |
|----|----|----|----|

Cell-1 and cell-2: read LSB 2

Fig. 5

Cell-2: read MSB 2

4-bit SRS resource information indicator field

| b3 | b2 | b1 | b0 |
|----|----|----|----|

Cell-1: read LSB 2

Fig. 6

Cell-2 MSB 2 ... Cell-1 LSB 2

5-bit antenna port information indicator field

| b4 | b3 | b2 | b1 | b0 |

Fig. 7A

Cell-1 b3, b2 ... Cell-1 b1, b0

5-bit antenna port information indicator field

| b4 | b3 | b2 | b1 | b0 |

Fig. 7B

Fig. 8

Fig. 9

103

Processor

101

Memory

Bus interface

102

Transceiver

Fig. 10

1110

Processing unit

1100

1120

First sending unit

Fig. 11

## INTERNATIONAL SEARCH REPORT

| International application No. |
|---|
| **PCT/CN2024/073421** |

**A.    CLASSIFICATION OF SUBJECT MATTER**

H04L5/00(2006.01)i;  H04W72/12(2023.01)i

According to International Patent Classification (IPC) or to both national classification and IPC

**B.    FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, DWPI, VCN, CNKI: 下行控制信息, dci, MC-DCI, schedul+, 调度, muti-cell, 多, 两, multi+, two, cell, 小区, 指示域, 信息域, indicator field, 大小, 长度, size, length, LBS, MBS, 比特, 数, bit, number, 最大, max+

**C.    DOCUMENTS CONSIDERED TO BE RELEVANT**

| Category* | Citation of document, with indication, where appropriate, of the relevant passages | Relevant to claim No. |
|---|---|---|
| X | CN 115004837 A (BEIJING XIAOMI MOBILE SOFTWARE CO., LTD.) 02 September 2022 (2022-09-02)<br>description, paragraphs 28-46 | 1-3, 5-16, 18-27, 29-40 |
| X | CN 115004836 A (BEIJING XIAOMI MOBILE SOFTWARE CO., LTD.) 02 September 2022 (2022-09-02)<br>description, paragraphs 28-42 | 1, 5, 8, 12, 14, 18, 21, 25, 29, 32, 36, 38, 40 |
| X | CN 115336324 A (BEIJING XIAOMI MOBILE SOFTWARE CO., LTD.) 11 November 2022 (2022-11-11)<br>description, paragraphs 43-74 | 1-3, 5-16, 18-27, 29-40 |
| A | CN 111245586 A (BEIJING UNISOC COMMUNICATIONS TECHNOLOGY CO., LTD.) 05 June 2020 (2020-06-05)<br>entire document | 1-40 |
| A | WO 2021187966 A1 (LG ELECTRONICS INC.) 23 September 2021 (2021-09-23)<br>entire document | 1-40 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 April 2024** | **22 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/073421** |

## C.   DOCUMENTS CONSIDERED TO BE RELEVANT

| Category* | Citation of document, with indication, where appropriate, of the relevant passages | Relevant to claim No. |
| --- | --- | --- |
| A | LENOVO et al. "R1-2000593 Text proposals for configured grant enhancement for NR-U" *3GPP TSG RAN WG1 #100*, 06 March 2020 (2020-03-06), entire document | 1-40 |

Form PCT/ISA/210 (second sheet) (July 2022)

## INTERNATIONAL SEARCH REPORT
### Information on patent family members

International application No.

**PCT/CN2024/073421**

| Patent document cited in search report | | | Publication date (day/month/year) | Patent family member(s) | | | Publication date (day/month/year) |
|---|---|---|---|---|---|---|---|
| CN | 115004837 | A | 02 September 2022 | WO | 2023206561 | A1 | 02 November 2023 |
| CN | 115004836 | A | 02 September 2022 | WO | 2023206563 | A1 | 02 November 2023 |
| CN | 115336324 | A | 11 November 2022 | WO | 2024000113 | A1 | 04 January 2024 |
| | | | | WO | 2024000986 | A1 | 04 January 2024 |
| CN | 111245586 | A | 05 June 2020 | US | 2022353851 | A1 | 03 November 2022 |
| | | | | JP | 2023552503 | A | 18 December 2023 |
| | | | | WO | 2021139825 | A1 | 15 July 2021 |
| | | | | EP | 4089948 | A1 | 16 November 2022 |
| | | | | EP | 4089948 | A4 | 03 January 2024 |
| WO | 2021187966 | A1 | 23 September 2021 | US | 2023134318 | A1 | 04 May 2023 |
| | | | | KR | 20220140798 | A | 18 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310121494